# EUROPEAN PATENT SPECIFICATION

(11) **EP 3 807 128 B1**
(45) Date of publication and mention of the grant of the patent: **31.01.2024**
(21) Application number: 19819026.6
(22) Date of filing: 04.06.2019
(51) Int. Cl.: G06V 20/56, G06V 10/44, B60Q 1/50, G06T 7/246, B60K 35/00, B60W 30/095, B60W 30/16, B60W 50/14, B60Q 5/00, B60Q 9/00, B60W 50/16, G06V 20/58, G08G 1/16

(54) **A RIDER ASSISTANCE SYSTEM AND METHOD**
FAHRERASSISTENZSYSTEM UND -VERFAHREN
SYSTÈME ET PROCÉDÉ D'ASSISTANCE À LA CONDUITE

(30) Priority: 13.06.2018 US 201862684208 P; 05.11.2018 US 201862755567 P; 04.03.2019 US 201962813168 P
(43) Date of publication of application: 21.04.2021
(60) Divisional application: 21199142.7
(73) Proprietor: Ride Vision Ltd., 4274814 Netanya (IL)
(72) Inventor: LAVI, Uri, 4274814 Netanya (IL); COHEN, Lior, 4274814 Netanya (IL); BRAVERMAN, Michael, 4274814 Netanya (IL)
(74) Representative: Studio Torta S.p.A.
(86) International application number: PCT/IL2019/050634
(87) International publication number: WO 2019/239402

(56) References cited:
- US-A1- 2008 036 576
- US-A1- 2009 139 793
- US-A1- 2013 311 075
- US-A1- 2014 314 279
- US-A1- 2016 129 840
- YANG MAU-TSUEN ET AL: "On-Road Collision Warning Based on Multiple FOE Segmentation Using a Dashboard Camera", IEEE TRANSACTIONS ON VEHICULAR TECHNOLOGY, IEEE, USA, vol. 64, no. 11, 1 November 2015 (2015-11-01), pages 4974-4984, XP011589402, ISSN: 0018-9545, DOI: 10.1109/TVT.2014.2378373 [retrieved on 2015-11-10]
- HENRIKSSON: "Driver Assistance Systems with focus on Automatic Emergency Brake", , 26 April 2013 (2013-04-26), XP055664344, Retrieved from the Internet: URL:https://www.diva-portal.org/smash/get/ diva2:618217/FULLTEXT01.pdf [retrieved on 2019-08-30]

## Description

### TECHNICAL FIELD

The invention relates to a riding assistance system and method.

### BACKGROUND

Automotive Advanced Driver Assistance Systems (also known as "ADAS") have become, in recent years, a standard in the car industry, inter alia due to the fact that safety is a main concern for car manufacturers. Governments around the world adopt strict car safety standards, and provide incentives to car manufacturers, and car owners, to install various ADAS in newly manufactured vehicles as well as in privately owned vehicles. Use of ADAS dramatically improves car drivers, and passengers, safety, and has proven to be life-saving in numerous cases. ADAS systems for preventing collisions are known from YANG MAU-TSUEN ET AL: "On-Road Collision Warning Based on Multiple FOE Segmentation Using a Dashboard Camera",IEEE TRANSACTIONS ON VEHICULAR TECHNOLOGY, IEEE, USA, vol. 64, no. 11, 1 November 2015 (2015-11-01), pages 4974-4984, ISSN: 0018-9545, DOI: 10.1109/TVT.2014.2378373.

Regretfully, the motorcycle industry trails behind other segments of the car industry. This may be a result of the fact that most motorcycles sold around the world today are required to be affordable, and addition of various ADAS adds to the costs of such vehicles. In addition, there are various difficulties that are specific to the motorcycle's environment. For example, motorcycles have very limited space to place ADAS. Providing alerts to motorcycle riders is also a challenge, as the riders wear a helmet, and operate in a noisy environment that is affected by wind, engine noise, etc. Furthermore, the viewing angle of a motorcycle rider wearing a helmet is limited, and placing visual indicators (such as a display for providing visual indications) on the motorcycle itself is challenging in terms of its positioning on the motorcycle at a location that is visible to the rider when riding the motorcycle. Still further, motorcycles behave differently than cars, their angles (e.g. lean angle) relative to the road shift much quicker and more dramatically than car angles with respect to the road, especially when the motorcycle leans, accelerates and brakes.

There is thus a need in the art for a new riding assistance system and method.

### GENERAL DESCRIPTION

The scope of the invention is defined in the apprended claims. In accordance with a first aspect of the presently disclosed subject matter, there is provided a riding assistance system for a motorcycle comprising: a processing resource; a memory configured to store date used by the processing resource; and at least one forward-looking camera configured to be installed on the motorcycle in a manner enabling it to capture images of a scene in front of the motorcycle; wherein the processing resource is configured to: obtain a series of at least two images consecutively acquired by the forward-looking camera, wherein a time passing between capturing of each consecutive image pair of the images is lower than a given threshold; analyze the images of the series to determine a time-to-collision between the motorcycle and one or more respective objects at least partially visible on at least part of the consecutive images in the series, wherein the time-to-collision is a time expected to pass until the motorcycle collides with the respective object; and generate a warning notification upon the time-to-collision being indicative of a threat to the motorcycle.

In some cases, the warning notification is provided to the rider of the motorcycle.

In some cases, the riding assistance system further comprises a lighting system comprising a plurality of lights visible to the rider of the motorcycle when facing forward of the motorcycle, and the warning notification is a provided by turning on one or more selected lights of the lights.

In some cases, the selected lights are selected in accordance with a threat type of the threat out of a plurality of threat types, wherein at least two of the threat types are associated with a distinct combination of selected lights.

In some cases, the warning notification is provided by turning on the selected lights in a pre-determined pattern and/or color.

In some cases, the pre-determined pattern is a blinking pattern of the selected lights.

In some cases, the lighting system is comprised within mirrors of the motorcycle.

In some cases, the lighting system is connected to the mirrors of the motorcycle and external to the mirrors of the motorcycle.

In some cases, the warning notification is a sound notification provided to the rider of the motorcycle via one or more speakers.

In some cases, the sound notification is a voice notification.

In some cases, the warning notification is vibration provided to the rider of the motorcycle via one or more vibrating elements causing vibration felt by the rider of the motorcycle.

In some cases, at least one of the respective objects is a pedestrian or a vehicle other than the motorcycle, and the warning notification is provided to the pedestrian or to a driver of the vehicle.

In some cases, the warning notification includes at least one of: turning on at least one light of the motorcycle, or horning using a horn of the motorcycle.

In some cases, the threat is a forward collision threat of the motorcycle colliding with one or more of the objects, and wherein the warning notification is generated upon the processing resource determining that the time-to-collision between the motorcycle and the respective object is lower than a pre-determined threshold time

In some cases, at least one given object of the objects is a curve in a lane in which the motorcycle is riding resulting in a change of direction of the motorcycle, and the threat is a lane keeping threat of the motorcycle failing to keep the lane, and the warning notification is generated upon the processing resource determining that a time-to-curve, being a time expected to pass until the motorcycle reaches the curve, is lower than a pre-determined threshold time.

In some cases, at least one given object of the objects is a curve in a lane in which the motorcycle is riding resulting in a change of direction of the motorcycle, and the threat is a leaning angle threat of the motorcycle entering the curve at a dangerous lean angle, and wherein the warning notification is generated upon the processing resource determining, using information of a current lean angle of the motorcycle, information of an angle of the curve and a time-to-curve, being a time expected to pass until the motorcycle reaches the curve, that the current lean angle, being a lean angle of the motorcycle with respect to ground, is lower than a first pre-determined threshold or higher than a second pre-determined threshold.

In some cases, the current lean angle is obtained from an Inertial Measurement Unit (IMU) connected to the motorcycle.

In some cases, the processing resource is further configured to determine the current lean angle of the motorcycle by analyzing at least two of the images.

In some cases, the riding assistance system further comprises at least one backward-looking camera configured to be installed on the motorcycle in a manner enabling it to capture images of a scene at the back of the motorcycle, and the processing resource is further configured to: obtain a second series of at least two second images consecutively acquired by the backward-looking camera, wherein a time passing between capturing of each second consecutive image pair of the second images is lower than the given threshold; analyze the second images of the second series to determine a second time-to-collision between the motorcycle and one or more respective second objects at least partially visible on at least part of the second images in the second series, wherein the second time-to-collision is a second time expected to pass until the motorcycle collides with the respective second object; and generate a second warning notification upon the second time-to-collision being indicative of a threat to the motorcycle.

In some cases, the threat is a backward collision threat of the motorcycle colliding with one or more of the second objects, and wherein the second warning notification is generated upon the processing resource determining that the second time-to-collision between the motorcycle and the respective second object is lower than a second pre-determined threshold time.

In some cases, the threat is a blind spot warning threat of presence of at least one of the second objects in a predetermined area relative to the motorcycle, and the second warning notification is generated upon the processing resource determining that at least one of the second objects is at least partially present in the predetermined area.

In some cases, the predetermined area is at the left-hand side and the right-hand side of the motorcycle.

In some cases, the processing resource is further configured to perform one or more protective measures upon the time-to-collision being indicative of the threat to the motorcycle.

In some cases, the protective measures include slowing down the motorcycle.

In some cases, the forward-looking camera is a wide-angle camera, covering an angle of more than 150°.

In some cases, the obtain is performed during movement of the motorcycle and in real-time.

In some cases, the notification is provided by projection onto a visor of a helmet of the rider of the motorcycle.

In some cases, at least one of the one or more second objects at least partially visible on at least part of the second images in the second series at a first time becomes a respective first object at least partially visible on at least part of the images in the series at a second time, later than the first time.

In some cases, the time-to-collision is determined using a determined distance between the motorcycle and the one or more respective objects at least partially visible on the at least part of the consecutive images in the series, and a relative movement between the motorcycle and the respective objects.

In accordance with a second aspect of the presently disclosed subject matter, there is provided a riding assistance method for a motorcycle, the method comprising: obtaining, by a processing resource, a series of at least two images consecutively acquired by at least one forward-looking camera installed on the motorcycle in a manner enabling it to capture images of a scene in front of the motorcycle, wherein a time passing between capturing of each consecutive image pair of the images is lower than a given threshold; analyzing, by the processing resource, the images of the series to determine a time-to-collision between the motorcycle and one or more respective objects at least partially visible on at least part of the consecutive images in the series, wherein the time-to-collision is a time expected to pass until the motorcycle collides with the respective object; and generating, by the processing resource, a warning notification upon the time-to-collision being indicative of a threat to the motorcycle.

In some cases, the warning notification is provided to the rider of the motorcycle.

In some cases, the warning notification is a provided by turning on one or more selected lights of a plurality of lights of a lighting system visible to the rider of the motorcycle when facing forward of the motorcycle.

In some cases, the selected lights are selected in accordance with a threat type of the threat out of a plurality of threat types, wherein at least two of the threat types are associated with a distinct combination of selected lights.

In some cases, the warning notification is provided by turning on the selected lights in a pre-determined pattern and/or color.

In some cases, the pre-determined pattern is a blinking pattern of the selected lights.

In some cases, the lighting system is comprised within mirrors of the motorcycle.

In some cases, the lighting system is connected to the mirrors of the motorcycle and external to the mirrors of the motorcycle.

In some cases, the warning notification is a sound notification provided to the rider of the motorcycle via one or more speakers.

In some cases, the sound notification is a voice notification.

In some cases, the warning notification is vibration provided to the rider of the motorcycle via one or more vibrating elements causing vibration felt by the rider of the motorcycle.

In some cases, at least one of the respective objects is a pedestrian or a vehicle other than the motorcycle, and the warning notification is provided to the pedestrian or to a driver of the vehicle.

In some cases, the warning notification includes at least one of: turning on at least one light of the motorcycle, or horning using a horn of the motorcycle.

In some cases, the threat is a forward collision threat of the motorcycle colliding with one or more of the objects, and wherein the warning notification is generated upon determining that the time-to-collision between the motorcycle and the respective object is lower than a pre-determined threshold time.

In some cases, at least one given object of the objects is a curve in a lane in which the motorcycle is riding resulting in a change of direction of the motorcycle, and the threat is a lane keeping threat of the motorcycle failing to keep the lane, and wherein the warning notification is generated upon determining, by the processing resource, that a time-to-curve, being a time expected to pass until the motorcycle reaches the curve, is lower than a pre-determined threshold time.

In some cases, at least one given object of the objects is a curve in a lane in which the motorcycle is riding resulting in a change of direction of the motorcycle, and the threat is a leaning angle threat of the motorcycle entering the curve at a dangerous lean angle, and wherein the warning notification is generated upon determining, by the processing resource, using information of a current lean angle of the motorcycle, information of an angle of the curve, and a time-to-curve, being a time expected to pass until the motorcycle reaches the curve, that the current lean angle, being a lean angle of the motorcycle with respect to ground, is lower than a first pre-determined threshold or higher than a second pre-determined threshold.

In some cases, the current lean angle is obtained from an Inertial Measurement Unit (IMU) connected to the motorcycle.

In some cases, the method further comprises determining, by the processing resource, the current lean angle of the motorcycle by analyzing at least two of the images.

In some cases, the method further comprises: obtaining, by the processing resource, a second series of at least two second images consecutively acquired by at least one backward-looking camera installed on the motorcycle in a manner enabling it to capture images of a scene at the back of the motorcycle, wherein a time passing between capturing of each second consecutive image pair of the second images is lower than the given threshold; analyzing, by the processing resource, the second images of the second series to determine a second time-to-collision between the motorcycle and one or more respective second objects at least partially visible on at least part of the second images in the second series, wherein the second time-to-collision is a second time expected to pass until the motorcycle collides with the respective second object; and generating, by the processing resource, a second warning notification upon the second time-to-collision being indicative of a threat to the motorcycle.

In some cases, the threat is a backward collision threat of the motorcycle colliding with one or more of the second objects, and wherein the second warning notification is generated upon determining, by the processing resource, that the second time-to-collision between the motorcycle and the respective second object, is lower than a second pre-determined threshold time.

In some cases, the threat is a blind spot warning threat of presence of at least one of the second objects in a predetermined area relative to the motorcycle, and wherein the second warning notification is generated upon determining, by the processing resource, that at least one of the second objects is at least partially present in the predetermined area.

In some cases, the predetermined area is at the left-hand side and the right-hand side of the motorcycle.

In some cases, the method further comprises performing, by the processing resource, one or more protective measures upon the time-to-collision being indicative of the threat to the motorcycle.

In some cases, the protective measures include slowing down the motorcycle.

In some cases, the forward-looking camera is a wide-angle camera, covering an angle of more than 150°.

In some cases, the obtain is performed during movement of the motorcycle and in real-time.

In some cases, the notification is provided by projection onto a visor of a helmet of the rider of the motorcycle.

In some cases, at least one of the one or more second objects at least partially visible on at least part of the second images in the second series at a first time becomes a respective first object at least partially visible on at least part of the images in the series at a second time, later than the first time.

In some cases, the time-to-collision is determined using a determined distance between the motorcycle and the one or more respective objects at least partially visible on the at least part of the consecutive images in the series, and a relative movement between the motorcycle and the respective objects.

In accordance with a third aspect of the presently disclosed subject matter, there is provided a non-transitory computer readable storage medium having computer readable program code embodied therewith, the computer readable program code, executable by a processing resource of a computer to perform a method comprising: obtaining, by the processing resource, a series of at least two images consecutively acquired by at least one forward-looking camera installed on the motorcycle in a manner enabling it to capture images of a scene in front of the motorcycle, wherein a time passing between capturing of each consecutive image pair of the images is lower than a given threshold; analyzing, by the processing resource, the images of the series to determine a time-to-collision between the motorcycle and one or more respective objects at least partially visible on at least part of the consecutive images in the series, wherein the time-to-collision is a time expected to pass until the motorcycle collides with the respective object; and generating, by the processing resource, a warning notification upon the time-to-collision being indicative of a threat to the motorcycle.

In accordance with a fourth aspect of the presently disclosed subject matter, there is provided a system for automatically controlling turn signals of a motorcycle, the system comprising: a processing resource; a memory configured to store date used by the processing resource; and at least one forward-looking camera configured to be installed on the motorcycle in a manner enabling it to capture images of a scene in front of the motorcycle; wherein the processing resource is configured to: obtain, in real-time, consecutive images consecutively acquired by the forward-looking camera, wherein a time passing between capturing of each consecutive image pair of the consecutive images is lower than a given threshold; continuously analyze a most recent group of one or more of the consecutive images to determine a rate of side movement of the motorcycle with respect to a lane in which the motorcycle is riding; upon the rate exceeding a threshold, turning on a turn signal of the motorcycle, signaling of a turn in a direction of the side movement of the motorcycle.

In some cases, the processing resource is further configured to turn off the turn signal of the motorcycle, upon analysis of the most recent group of one or more of the consecutive images indicating that the side movement ended.

In some cases, the processing resource determines the rate also based on a lean angle of the motorcycle obtained from an Inertial Measurement Unit (IMU) connected to the motorcycle.

In some cases, the system further comprises at least one backward-looking camera configured to be installed on the motorcycle in a manner enabling it to capture images of a scene at the back of the motorcycle, and the processing resource is further configured to: continuously obtain, in real-time, consecutive second images consecutively acquired by the backward-looking camera, wherein a second time passing between capturing of each consecutive second image pair of the consecutive second images is lower than a second given threshold; continuously analyze a most recent group of one or more of the consecutive second images to determine presence of one or more vehicles driving behind the motorcycle; wherein the turn signal is turned on only in case the processing resource determines the presence of the vehicles driving behind the motorcycle.

In accordance with a fifth aspect of the presently disclosed subject matter, there is provided a method for automatically controlling turn signals of a motorcycle, the method comprising: obtaining, by a processing resource, in real-time, consecutive images consecutively acquired by at least one forward-looking camera installed on the motorcycle in a manner enabling it to capture images of a scene in front of the motorcycle, wherein a time passing between capturing of each consecutive image pair of the consecutive images is lower than a given threshold; continuously analyzing, by the processing resource, a most recent group of one or more of the consecutive images to determine a rate of side movement of the motorcycle with respect to a lane in which the motorcycle is riding; upon the rate exceeding a threshold, turning on, by the processing resource, a turn signal of the motorcycle, signaling of a turn in a direction of the side movement of the motorcycle.

In some cases, the method further comprises turning off, by the processing resource, the turn signal of the motorcycle, upon analysis of the most recent group of one or more of the consecutive images indicating that the side movement ended.

In some cases, the rate is determined also based on a lean angle of the motorcycle obtained from an Inertial Measurement Unit (IMU) connected to the motorcycle.

In some cases, the method further comprises: continuously obtaining, by the processing resource, in real-time, consecutive second images consecutively acquired by at least one backward-looking camera installed on the motorcycle in a manner enabling it to capture images of a scene at the back of the motorcycle, wherein a second time passing between capturing of each consecutive second image pair of the consecutive second images is lower than a second given threshold; continuously analyzing, by the processing resource, a most recent group of one or more of the consecutive second images to determine presence of one or more vehicles driving behind the motorcycle; wherein the turn signal is turned on only in case the determination is that there is presence of the vehicles driving behind the motorcycle.

In accordance with a sixth aspect of the presently disclosed subject matter, there is provided a non-transitory computer readable storage medium having computer readable program code embodied therewith, the computer readable program code, executable by a processing resource of a computer to perform a method comprising: obtaining, by the processing resource, in real-time, consecutive images consecutively acquired by at least one forward-looking camera installed on the motorcycle in a manner enabling it to capture images of a scene in front of the motorcycle, wherein a time passing between capturing of each consecutive image pair of the consecutive images is lower than a given threshold; continuously analyzing, by the processing resource, a most recent group of one or more of the consecutive images to determine a rate of side movement of the motorcycle with respect to a lane in which the motorcycle is riding; upon the rate exceeding a threshold, turning on, by the processing resource, a turn signal of the motorcycle, signaling of a turn in a direction of the side movement of the motorcycle.

In accordance with a seventh aspect of the presently disclosed subject matter, there is provided an adaptive speed control system for a motorcycle comprising: a processing resource; a memory configured to store date used by the processing resource; and at least one forward-looking camera configured to be installed on the motorcycle in a manner enabling it to capture images of a scene in front of the motorcycle; wherein the processing resource is configured to: obtain an indication of a reference distance to maintain between the motorcycle and a vehicle driving in front of the motorcycle; obtain, in real-time, consecutive images consecutively acquired by the forward-looking camera, wherein a time passing between capturing of each consecutive image pair of the consecutive images is lower than a given threshold; continuously analyze the consecutive images to determine an actual distance between the motorcycle and a vehicle driving in front of the motorcycle; upon the actual distance being different from the reference distance, control a speed of the motorcycle to return to the reference distance from the vehicle.

In some cases, the reference distance is determined upon a rider of the motorcycle providing a trigger by analyzing one or more reference distance determination images captured by the forward-looking camera up to a pre-determined time before or after the rider of the motorcycle providing the trigger.

In accordance with a eighth aspect of the presently disclosed subject matter, there is provided an adaptive speed control method for a motorcycle, the method comprising: obtaining, by a processing resource, an indication of a reference distance to maintain between the motorcycle and a vehicle driving in front of the motorcycle; obtaining, by the processing resource, in real-time, consecutive images consecutively acquired by at least one forward-looking camera installed on the motorcycle in a manner enabling it to capture images of a scene in front of the motorcycle, wherein a time passing between capturing of each consecutive image pair of the consecutive images is lower than a given threshold; continuously analyzing, by the processing resource, the consecutive images to determine an actual distance between the motorcycle and a vehicle driving in front of the motorcycle; upon the actual distance being different from the reference distance, controlling, by the processing resource, a speed of the motorcycle to return to the reference distance from the vehicle.

In some cases, the reference distance is determined upon a rider of the motorcycle providing a trigger by analyzing one or more reference distance determination images captured by the forward-looking camera up to a pre-determined time before or after the rider of the motorcycle providing the trigger.

In accordance with a ninth aspect of the presently disclosed subject matter, there is provided a non-transitory computer readable storage medium having computer readable program code embodied therewith, the computer readable program code, executable by a processing resource of a computer to perform a method comprising: obtaining, by the processing resource, an indication of a reference distance to maintain between the motorcycle and a vehicle driving in front of the motorcycle; obtaining, by the processing resource, in real-time, consecutive images consecutively acquired by at least one forward-looking camera installed on the motorcycle in a manner enabling it to capture images of a scene in front of the motorcycle, wherein a time passing between capturing of each consecutive image pair of the consecutive images is lower than a given threshold; continuously analyzing, by the processing resource, the consecutive images to determine an actual distance between the motorcycle and a vehicle driving in front of the motorcycle; upon the actual distance being different from the reference distance, controlling, by the processing resource, a speed of the motorcycle to return to the reference distance from the vehicle.

In accordance with a tenth aspect of the presently disclosed subject matter, there is provided a riding assistance system for a motorcycle comprising: a processing resource; a memory configured to store date data usable by the processing resource; and at least one wide-angle forward-looking camera configured to be installed on the motorcycle in a manner enabling it to capture images of a scene including at least a right side and a left side in front of the motorcycle; wherein the processing resource is configured to: obtain a series of at least two images consecutively acquired by the camera, wherein a time passing between capturing of each consecutive image pair of the images is lower than a first threshold; analyze a region of interest within at least a pair of consecutive images of the series to identify features having respective feature locations within the at least pair of consecutive images; match each of the features and its respective feature location within each image of the at least pair of consecutive images of the series to determine vectors of movement of each of the respective features between the at least pair of consecutive images of the series, the vectors of movement representing the movement of the features over time; and generate a warning notification upon a criterion being met, wherein the criterion is associated with the vectors of movement of respective features or with enhanced vectors of movement of respective features.

In some cases, the criterion is that a number of the vectors of movement of respective features being in a collision course with a direction of the motorcycle exceeds another threshold.

In some cases, the criterion is that an average vector being a vector representing the average of the vectors of movements is in a collision course with a direction of the motorcycle.

In some cases, the feature locations are matched using one or more of: L2 function, or nearest neighbor algorithm.

In some cases, the processing resource is further configured to estimate a likelihood of presence of a vehicle associated with at least some of the features within a given image of the at least pair of consecutive images of the series; and wherein the warning notification is generated only if the likelihood is above a third threshold.

In some cases, the estimate is performed using a convolutional neural network.

The processing resource is further configured to: analyze the region of interest within at least one other pair of consecutive images of the series to identify the features having respective feature locations, wherein at least one of the images of the pair is one of the images of the other pair; match the feature locations of the features within the pair and the other pair of consecutive images of the series to determine the enhanced vectors of movement of each of the respective features between the consecutive images of the pair and the other pair, wherein the enhanced vectors of movement are associated with a longest distance between the respective feature's locations within the images of the pair and the other pair.

In some cases, the processing resource is further configured to: estimate a trajectory of each of the features; identify an intersection point of the estimated trajectories; wherein the criterion is met when the intersection is within a pre-defined area within a given image of the series.

In some cases, the processing resource is further configured to determine a mean value of optical flow in a vertical direction towards the motorcycle within at least one other region of interest within the pair of consecutive images of the series, wherein the criterion is met when the mean value of optical flow exceeds an allowed mean optical flow threshold.

In some cases, the warning notification is provided to the rider of the motorcycle.

In some cases, the system further comprises a lighting system comprising a plurality of lights visible to the rider of the motorcycle when facing forward of the motorcycle, and wherein the warning notification is a provided by turning on one or more selected lights of the lights.

In some cases, the selected lights are selected in accordance with a threat type of the threat out of a plurality of threat types, wherein at least two of the threat types are associated with a distinct combination of selected lights.

In some cases, the warning notification is provided by turning on the selected lights in a pre-determined pattern and/or color.

In some cases, the pre-determined pattern is a blinking pattern of the selected lights.

In some cases, the lighting system is comprised within mirrors of the motorcycle.

In some cases, the lighting system is connected to the mirrors of the motorcycle and external to the mirrors of the motorcycle.

In some cases, the warning notification is a sound notification provided to the rider of the motorcycle via one or more speakers.

In some cases, the sound notification is a voice notification.

In some cases, the warning notification is vibration provided to the rider of the motorcycle via one or more vibrating elements causing vibration felt by the rider of the motorcycle.

In some cases, the wide-angle forward-looking camera is a wide-angle camera, covering an angle of more than 90°.

In some cases, the obtain is performed during movement of the motorcycle and in real-time.

In some cases, the notification is provided by projection onto a visor of a helmet of the rider of the motorcycle.

In some cases, the images cover an angle of at least 60° of the scene.

In accordance with a eleventh aspect of the presently disclosed subject matter, there is provided a riding assistance method for a motorcycle, the method comprising: obtaining, by a processing resource, a series of at least two images consecutively acquired by at least one wide-angle forward-looking camera configured to be installed on the motorcycle in a manner enabling it to capture images of a scene including at least a right side and a left side in front of the motorcycle, wherein a time passing between capturing of each consecutive image pair of the images is lower than a first threshold; analyzing a region of interest within at least a pair of consecutive images of the series to identify features having respective feature locations within the at least pair of consecutive images; matching each of the features and its respective feature location within each image of the at least pair of consecutive images of the series to determine vectors of movement of each of the respective features between the at least pair of consecutive images of the series, the vectors of movement representing the movement of the features over time; and generating a warning notification upon a criterion being met, wherein the criterion is associated with the vectors of movement of respective features or with enhanced vectors of movement of respective features.

In some cases, the criterion is that a number of the vectors of movement of respective features being in a collision course with a direction of the motorcycle exceeds another threshold.

In some cases, the criterion is that an average vector being a vector representing the average of the vectors of movements is in a collision course with a direction of the motorcycle.

In some cases, the feature locations are matched using one or more of: L2 function, or nearest neighbor algorithm.

In some cases, the method further comprises estimating a likelihood of presence of a vehicle associated with at least some of the features within a given image of the at least pair of consecutive images of the series; and wherein the warning notification is generated only if the likelihood is above a third threshold.

In some cases, the estimating is performed using a convolutional neural network.

In some cases, the method further comprises: analyzing the region of interest within at least one other pair of consecutive images of the series to identify the features having respective feature locations, wherein at least one of the images of the pair is one of the images of the other pair; and matching the feature locations of the features within the pair and the other pair of consecutive images of the series to determine the enhanced vectors of movement of each of the respective features between the consecutive images of the pair and the other pair, wherein the enhanced vectors of movement are associated with a longest distance between the respective feature's locations within the images of the pair and the other pair.

In some cases, the method further comprises: estimating a trajectory of each of the features; identifying an intersection point of the estimated trajectories; wherein the criterion is met when the intersection is within a pre-defined area within a given image of the series.

In some cases, the method further comprises determining a mean value of optical flow in a vertical direction towards the motorcycle within at least one other region of interest within the pair of consecutive images of the series, wherein the criterion is met when the mean value of optical flow exceeds an allowed mean optical flow threshold.

In some cases, the warning notification is provided to the rider of the motorcycle.

In some cases, the warning notification is a provided by turning on one or more selected lights of a plurality of lights comprised in a lighting system, the lights being visible to the rider of the motorcycle when facing forward of the motorcycle.

In some cases, the selected lights are selected in accordance with a threat type of the threat out of a plurality of threat types, wherein at least two of the threat types are associated with a distinct combination of selected lights.

In some cases, the warning notification is provided by turning on the selected lights in a pre-determined pattern and/or color.

In some cases, the pre-determined pattern is a blinking pattern of the selected lights.

In some cases, the lighting system is comprised within mirrors of the motorcycle.

In some cases, the lighting system is connected to the mirrors of the motorcycle and external to the mirrors of the motorcycle.

In some cases, the warning notification is a sound notification provided to the rider of the motorcycle via one or more speakers.

In some cases, the sound notification is a voice notification.

In some cases, the warning notification is vibration provided to the rider of the motorcycle via one or more vibrating elements causing vibration felt by the rider of the motorcycle.

In some cases, the wide-angle forward-looking camera is a wide-angle camera, covering an angle of more than 90°.

In some cases, the obtaining is performed during movement of the motorcycle and in real-time.

In some cases, the notification is provided by projection onto a visor of a helmet of the rider of the motorcycle.

In some cases, the images cover an angle of at least 60° of the scene.

In accordance with a twelfth aspect of the presently disclosed subject matter, there is provided a non-transitory computer readable storage medium having computer readable program code embodied therewith, the computer readable program code, executable by a processing resource to perform a method comprising: obtaining, by the processing resource, a series of at least two images consecutively acquired by at least one wide-angle forward-looking camera configured to be installed on the motorcycle in a manner enabling it to capture images of a scene including at least a right side and a left side in front of the motorcycle, wherein a time passing between capturing of each consecutive image pair of the images is lower than a first threshold; analyzing a region of interest within at least a pair of consecutive images of the series to identify features having respective feature locations within the at least pair of consecutive images; matching each of the features and its respective feature location within each image of the at least pair of consecutive images of the series to determine vectors of movement of each of the respective features between the at least pair of consecutive images of the series, the vectors of movement representing the movement of the features over time; and generating a warning notification upon a criterion being met, wherein the criterion is associated with the vectors of movement of respective features or with enhanced vectors of movement of respective features.

### BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:
**Fig. 1** is a schematic illustration of a motorcycle with a riding assistance system, in accordance with the presently disclosed subject matter;
**Fig. 2** is a block diagram schematically illustrating one example of a riding assistance system, in accordance with the presently disclosed subject matter;
**Fig. 3** is a flowchart illustrating one example of a sequence of operations carried out for providing warnings relating to risks in front of a motorcycle to a rider of the motorcycle and/or to other entities, in accordance with the presently disclosed subject matter;
**Fig. 4** is a flowchart illustrating one example of a sequence of operations carried out for providing warnings relating to risks in the back of a motorcycle to a rider of the motorcycle and/or to other entities, in accordance with the presently disclosed subject matter;
**Fig. 5** is a flowchart illustrating one example of a sequence of operations carried out for automatic control of turn signals of a motorcycle, in accordance with the presently disclosed subject matter;
**Fig. 6** is a flowchart illustrating one example of a sequence of operations carried out for selective activation of turn signals of a motorcycle, in accordance with the presently disclosed subject matter;
**Fig. 7** is a flowchart illustrating one example of a sequence of operations carried out for providing adaptive cruise control for a motorcycle, in accordance with the presently disclosed subject matter;
**Fig. 8** is a schematic illustration of an exemplary visual language of the riding assistance system, in accordance with the presently disclosed subject matter;
**Fig. 9** is a flowchart illustrating an example of a sequence of operations carried out for providing warnings relating to risks of side collisions to a rider of the motorcycle and/or to other entities, in accordance with the presently disclosed subject matter;
**Fig. 10** is another flowchart illustrating a sequence of operations carried out for determining enhanced vectors of motion, in accordance with the presently disclosed subject matter;
**Fig. 11** is a schematic illustration of an exemplary frame, having a non-continuous region of interest, in accordance with the presently disclosed subject matter;
**Fig. 12** is a schematic illustration of a sequence of frames illustrating a threat to a motorcycle, in accordance with the presently disclosed subject matter;
**Fig. 13** is a schematic illustration of a sequence of frames illustrating a non-threat to a motorcycle, in accordance with the presently disclosed subject matter;
**Fig. 14** is a flowchart illustrating an example of a sequence of operations carried out for determining a safety zone, in accordance with the presently disclosed subject matter;
**Fig. 15a** is a picture of a first traffic situation captured by a forward-looking camera installed on a motorcycle, in accordance with the presently disclosed subject matter;
**Fig. 15b** shows the edges of objects within the picture of Fig. 16a as detected by an edge detection algorithm, in accordance with the presently disclosed subject matter;
**Fig. 15c** shows a top view of the objects within the picture of Fig. 16a;
**Fig. 16a** is a picture of a second traffic situation captured by a forward-looking camera installed on a motorcycle, in accordance with the presently disclosed subject matter;
**Fig. 16b** shows the edges of objects within the picture of Fig. 17a as detected by an edge detection algorithm, in accordance with the presently disclosed subject matter;
**Fig. 16c** shows a top view of the objects within the picture of Fig. 17a; and
**Fig. 17** is a flowchart illustrating an example of a sequence of operations carried out for determining a safety zone depth, in accordance with the presently disclosed subject matter.

### DETAILED DESCRIPTION

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures, and components have not been described in detail so as not to obscure the presently disclosed subject matter.

In the drawings and descriptions set forth, identical reference numerals indicate those components that are common to different embodiments or configurations.

Unless specifically stated otherwise, as apparent from the following discussions, it is appreciated that throughout the specification discussions utilizing terms such as "obtaining", "analyzing", "generating", "determining", "performing", "controlling" or the like, include action and/or processes of a computer that manipulate and/or transform data into other data, said data represented as physical quantities, e.g. such as electronic quantities, and/or said data representing the physical objects. The terms "computer", "processor", and "controller" should be expansively construed to cover any kind of electronic device with data processing capabilities, including, by way of non-limiting example, a personal desktop/laptop computer, a server, a computing system, a communication device, a smartphone, a tablet computer, a smart television, a processor (e.g. digital signal processor (DSP), a microcontroller, a field programmable gate array (FPGA), an application specific integrated circuit (ASIC), etc.), a group of multiple physical machines sharing performance of various tasks, virtual servers co-residing on a single physical machine, any other electronic computing device, and/or any combination thereof.

The operations in accordance with the teachings herein may be performed by a computer specially constructed for the desired purposes or by a general-purpose computer specially configured for the desired purpose by a computer program stored in a non-transitory computer readable storage medium. The term "non-transitory" is used herein to exclude transitory, propagating signals, but to otherwise include any volatile or nonvolatile computer memory technology suitable to the application.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure or characteristic described in connection with the embodiment(s) is included in at least one embodiment of the presently disclosed subject matter. Thus, the appearance of the phrase "one case", "some cases", "other cases" or variants thereof does not necessarily refer to the same embodiment(s).

It is appreciated that, unless specifically stated otherwise, certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

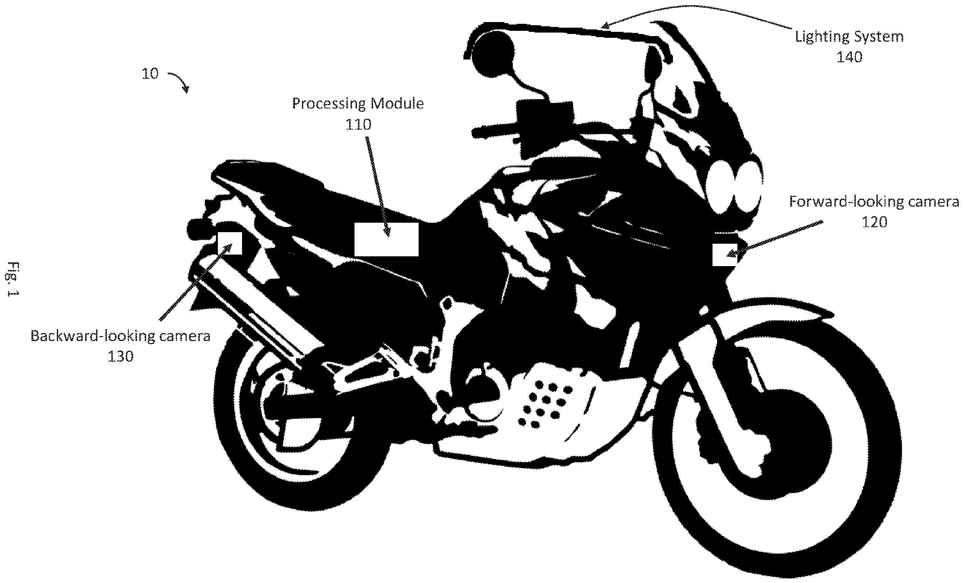

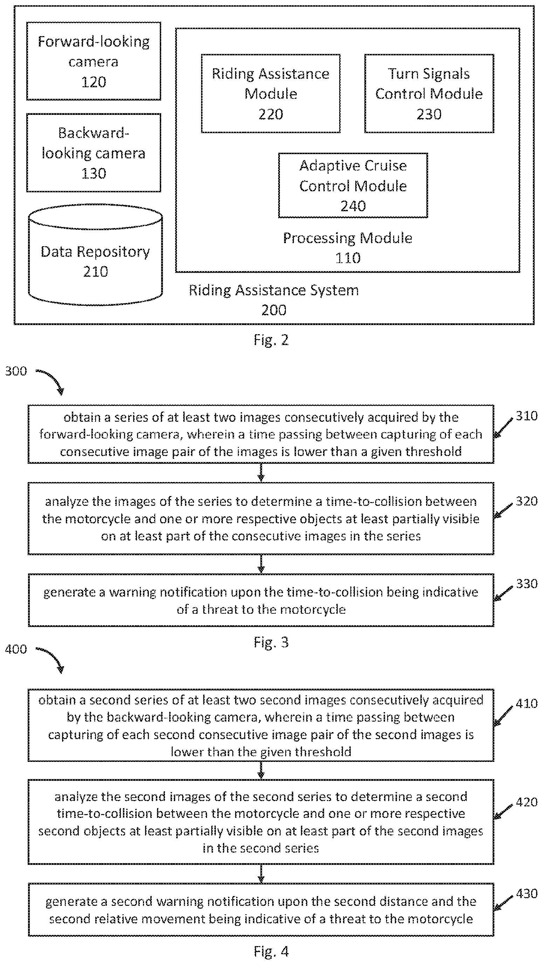

In embodiments of the presently disclosed subject matter, fewer, more and/or different stages than those shown in **Figs. 3-7**, 9-10, 14 and 17 may be executed. In embodiments of the presently disclosed subject matter one or more stages illustrated in **Figs. 3-7**, 9-10,14 and 17 may be executed in a different order and/or one or more groups of stages may be executed simultaneously. **Figs. 1** **and** **2** illustrate a general schematic of the system architecture in accordance with an embodiment of the presently disclosed subject matter. Each module in **Figs. 1** **and** **2** can be made up of any combination of software, hardware and/or firmware that performs the functions as defined and explained herein. The modules in **Figs. 1** **and** **2** may be centralized in one location or dispersed over more than one location. In other embodiments of the presently disclosed subject matter, the system may comprise fewer, more, and/or different modules than those shown in **Figs. 1** **and** **2****.**

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

It is to be noted that in the following description, reference is made to a motorcycle as a term for any 2-wheeler variety, however the disclosure provided herein can also be used for other vehicles, including 3-wheelers, 4-wheelers, and any other type of vehicle, motorized or not, *mutatis mutandis.* Some exemplary types of vehicles on which the presently disclosed subject matter can be implemented include motor bicycles, motorized carts, golf carts, electric scooters, cars, trucks, etc.

Bearing this in mind, attention is drawn to **Fig. 1****,** a schematic illustration of a motorcycle with a riding assistance system, in accordance with the presently disclosed subject matter.

In accordance with the presently disclosed subject matter, a motorcycle 10 is provided, as a platform on which the riding assistance system is installed. The riding assistance system includes one or more sensors configured to sense the environment of the motorcycle 10. The sensors can include at least one forward-looking camera(s) 120, configured to obtain images of an area in front of the motorcycle 10, and optionally also at least one backward-looking camera(s) 130, configured to obtain images of an area in the rear-end of the motorcycle 10. The forward-looking camera(s) 120 can be positioned above the motorcycle 10 headlight, beneath the motorcycle 10 headlight, within the motorcycle 10 headlight (e.g. if it is integrated thereto during the manufacturing thereof), or in any other manner that provides the forward-looking camera(s) 120 with a clear view to the area in front of the motorcycle 10. The backward-looking camera(s) 130 can be positioned above the motorcycle 10 rear light, beneath the motorcycle 10 rear light, within the motorcycle 10 rear light (e.g. if it is integrated thereto during the manufacturing thereof), or in any other manner that provides the backward-looking camera(s) 130 with a clear view to the area in the back of the motorcycle 10.

The cameras (i.e. the at least one forward-looking camera(s) 120, and the at least one backward-looking camera(s) 130) can optionally be arranged in a manner that enables capturing a wide-angle view of the front of the motorcycle 10 and/or the back of the motorcycle 10. In some embodiments, the wide angle can be any angle above 60°, or even 90°, and in more specific cases it can be an angle of 175° or even 180° and above. It can be appreciated that having forward-looking and backward-looking cameras with an angle of 175° or even 180° enables a coverage of 350°-360° around the motorcycle 10. Having a coverage of 350°-360° around the motorcycle 10 effectively results in an ability to always identify threats from other vehicles, as the size of a vehicle results in at least part thereof always being visible within the field of view of at least one of the forward-looking camera(s) 120 or backward-looking camera(s) 130.

An exemplary specifications of a camera that can be used is a wide-angle FOV175° 5-Megapixel Camera Module by SAINSMART, SKU 101-40-187 (see https://www.sainsmart.com/products/wide-angle-fov 175-5-megapixel-camera-module). The forward-looking camera(s) 120 and the backward-looking camera(s) 130 can have a resolution of at least two Mega-Pixel (MP), and in some embodiments at least five MP. The forward-looking camera(s) 120 and the backward-looking camera(s) 130 can have a frame rate of at least twenty Frames-Per-Second (FPS), and in some embodiments at least thirty FPS.

It is to be noted that in some cases, in addition to the forward-looking wide-angle camera, an additional forward-looking narrow-angle camera can be used, e.g. for redundancy, or for enabling improved accuracy at higher ranges than the forward-looking wide-angle camera. In a similar manner, in some cases, in addition to the backward-looking wide-angle camera, an additional backward-looking narrow-angle camera can be used, e.g. for redundancy, or for enabling improved accuracy at higher ranges than the backward-looking wide-angle camera.

As indicated herein, in alternative embodiments more than one forward-looking cameras 120, or more than one backward-looking cameras 130 can be used, each having a non-wide angle, or a wide angle, while the fields of view of the cameras may partially overlap, or be non-overlapping. In some embodiments the combined fields of view of the cameras cover a wide angle, e.g. of 60°, 90°, 175° or even 180° or more.

Although the figure shown only the forward-looking camera(s) 120 and the backward-looking camera(s) 130 as the sensors, the sensors can include other/additional sensors, including forward-looking and/or backward-looking radar(s), a plurality of laser range finders, or any other sensor that can enable the processing module to determine a time-to-collision between the motorcycle 10 and other objects that may pose a risk on the motorcycle 10 (e.g. other vehicles within a certain threshold distance from the motorcycle 10).

The information acquired by the sensors is then obtained and analyzed by a processing module 110 in order to identify threats to the motorcycle 10, as explained in more detail herein. The processing module 110 can be located under the motorcycle's 10 seat, but can alternatively be located in other places in a motorcycle. The processing module 110 can be connected to the motorcycle's 10 battery, or it can have its own power supply. The sensors (e.g. forward-looking camera(s) 120 and the backward-looking camera(s) 130) can be connected to a serializer and then through a coax cable to deserializer that in turn feeds the processing module 110 with the information acquired by the sensors.

In case the sensors are the forward-looking camera(s) 120 and/or the backward-looking camera(s) 130, the processing module analyzes images acquired thereby for this purpose. Some exemplary threats that can be identified by the processing module 110 include Right Collision Warning of an object (whether an obstacle on the road, another vehicle, a pedestrian, or any other object detectable by the processing module 110) nearing the motorcycle 10 from the right colliding therewith, Left Collision Warning of an object (whether an obstacle on the road, another vehicle, a pedestrian, or any other object detectable by the processing module 110) nearing the motorcycle 10 from the left colliding therewith, Forward Collision Warning (FCW) of the motorcycle 10 colliding with an object (whether an obstacle on the road, another vehicle, a pedestrian, or any other object detectable by the processing module 110) in front of it, Blind Spot Warning (BSW) indicative of presence of an object (whether an obstacle on the road, another vehicle, a pedestrian, or any other object detectable by the processing module 110) at a certain area that the rider of the motorcycle 10 may not be able to see, Road/Lane Keeping Warning (RKW) of the motorcycle 10 not keeping its lane, Distance Keeping Warning (DKW) of the motorcycle 10 not being below a certain distance from an object (whether an obstacle on the road, another vehicle, a pedestrian, or any other object detectable by the processing module 110) in front of it, Lean Angle Warning of the motorcycle 10 lean angle being too acute or not acute enough, Curve Speed Warning (CSW) of the motorcycle 10 approaching a curve at a speed that may result in it failing to pass the curve.

Upon identification of a threat to the motorcycle 10, the processing module 110 can be configured to alert a rider of the motorcycle 10, in order to enable the rider to perform measures in order to eliminate, or reduce any risk. The alerts can be provided in any manner that can be sensed by a rider of the motorcycle 10. In some cases, the alert can be provided via a lighting system 140 including one or more light generating components that generate light in a visible spectrum (e.g. Light Emitting Diode (LED) lights or any other light generating device). The lighting system 140 can be positioned on the skyline of the mirrors of the motorcycle 10, as shown in the illustration. In some cases, it can be integrated into the mirrors themselves. In other cases, it can be added on top of existing mirrors of the motorcycle 10. The lighting system 140 generates lights that can be seen by a rider of the motorcycle, either above and/or on the sides and/or on the bottom of the mirrors.

The alerts can alternatively, or additionally, be provided via other means, including via vibrating elements connected to a helmet worn by the rider (e.g. using a Bluetooth connection between the processing module 110 and the vibrating element) or to the motorcycle's 10 seat or any other wearable object worn by the rider in a manner that will enable the rider to sense the vibrations provided as alerts. Another optional alert mechanism can include sound-based alerts provided to the motorcycle 10 rider via headphones and/or speakers (e.g. speakers within a helmet worn by the motorcycle 10 rider) that generate sounds that can be heard by the rider, even when riding at high speeds. Yet another optional alert mechanism can include projecting, using a projection mechanism, information indicative of the alert, and optionally it's type and/or other information associated therewith, onto a visor of a helmet of the rider of the motorcycle 10.

It is to be noted that in some cases the riding assistance system can be configured to identify a plurality of types of threats, and in such cases, each threat can be associated with a distinct alert, enabling a rider of the motorcycle 10 to determine the threat type. Accordingly, when the alerts are provided using the lighting system 140, each type of alert can be associated with a certain combination of lights being provided, optionally in a certain pattern that includes blinking at a certain pace. In some cases, the lights can change color in accordance with the severity of the threat. For example, if there is a collision threat of the motorcycle 10 colliding with another vehicle driving in front of it, (a) when the likelihood of the threat to occur is lower than X, the lights will be orange indicating of a mild threat, and (b) when the likelihood of the threat to occur is higher than X, the lights will be red indicating of a severe threat. As another example, when the alerts are provided using sound, the volume of the sound can be increased as the threat increases. As yet another example, when the alerts are provided using vibrating elements, the vibrations frequency can be increased as the threat increases.

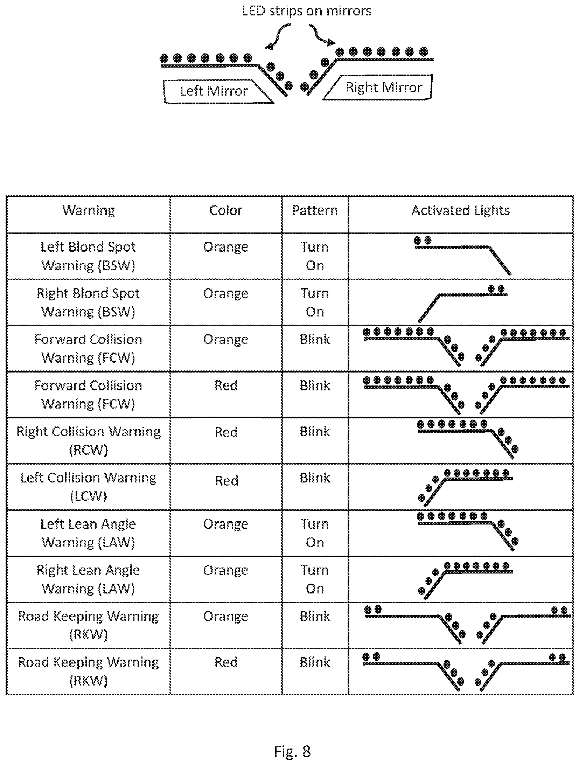

One exemplary type of visual language that may be employed is exemplified at Fig. 8, showing a table illustrating various types of visual indications provided to the rider of the motorcycle 10, upon identification of various types of threats. In the table, each warning is associated with a certain color of the lights provided by the lighting system (e.g. orange and red, optionally in accordance with the severity of the threat, where a mild threat is associated with an orange color and a severe threat with a red color), a pattern of activation of the lighting system (e.g. simply turning on the lights, or turning them on at a certain pattern such as blinking), and which of the LED lights are activated for each type of warning. The visual indications in the illustrated example are provided by LED stripes on the mirrors of the motorcycle 10.

Returning to Fig. 1, in some cases, in addition to, or as an alternative for, providing alerts to the rider of the motorcycle 10, the riding assistance system can provide an alert to a pedestrian or to a driver of another vehicle, other than the motorcycle 10, indicating of it being a threat to the motorcycle 10. In such cases, the alert can be provided by turning on at least one front and/or back light of the motorcycle 10, or horning using a horn of the motorcycle 10, thereby providing visual and/or sound based alerts to the pedestrian or to the driver of the other vehicle. It is to be noted that for this purpose, the riding assistance system can be connected to the motorcycle's 10 Controller Area Network (CAN) bus, which can enable it to connect to various systems of the motorcycle 10, including one or more of the group consisting of its throttle, its horn, its head and/or tail lights, its brakes, its display, etc. In other cases, for example when it is not possible to connect to a CAN bus of the motorcycle 10, the riding assistance system can use a dedicated light(s) and/or horn that can be installed as part of the riding assistance system in order to eliminate the need to use systems of the motorcycle 10 (i.e. systems connected to a CAN bus of the motorcycle 10). For example, a lighting unit can be added next to the brake light of the motorcycle 10 and/or next to backwards turn lights of the motorcycle 10.

In some cases, the processing module 110 is further configured to perform one or more protective measures upon identification of a threat to the motorcycle 10, in order to eliminate, or reduce the threat. The protective measures can include slowing down the motorcycle, by using an automated downshifting or its brakes and/or by controlling the motorcycle's 10 throttle (or otherwise controlling the amount of fuel flow to the motorcycle 10 engine) in a manner that is expected to result in slowing the motorcycle 10 down. It is to be noted that in some cases, a protective measure can include increasing the speed of the motorcycle 10, for example when its lean angle is dangerously acute.

Although not shown in the figure, the riding assistance system can also include (a) a Global Positioning System tracking unit (or any other type of device that enables determining a current geographical location of the motorcycle 10), and/or (b) an Inertial Measurement Unit (IMU) comprising accelerometers and/or gyroscopes and/or magnetometers, that enable, for example, determining a lean angle of the motorcycle 10, and/or (c) a data repository which can be used to store various data, as further detailed herein, inter alia with reference to Fig. 2.

Having described the illustration of a motorcycle with a riding assistance system, attention is drawn to **Fig. 2****,** a block diagram schematically illustrating one example of a riding assistance system, in accordance with the presently disclosed subject matter.

According to certain examples of the presently disclosed subject matter, riding assistance system 200 can comprise at least one forward-looking camera(s) 120 and/or at least one backward-looking camera(s) 130, as detailed herein, inter alia with reference to Fig. 1.

Riding assistance system 200 can further comprise, or be otherwise associated with, a data repository 210 (e.g. a database, a storage system, a memory including Read Only Memory - ROM, Random Access Memory - RAM, or any other type of memory, etc.) configured to store data, including, inter alia, information acquired by the sensors (e.g. images acquired by the forward-looking camera(s) 120 and/or backward-looking camera(s) 130), recording of past rides, etc.

Riding assistance system 200 further comprises a processing module 110. Processing module 110 can include one or more processing units (e.g. central processing units), microprocessors, microcontrollers (e.g. microcontroller units (MCUs)) or any other computing processing device, which are adapted to independently or cooperatively process data for controlling relevant riding assistance system 200 resources and for enabling operations related to riding assistance system 200 resources.

The processing module 210 can comprise one or more of the following modules: riding assistance module 220, turn signals control module 230 and adaptive cruise control module 240.

According to some examples of the presently disclosed subject matter, riding assistance module 220 is configured to provide riding assistance to a rider of the motorcycle 10. The assistance can include warnings indicative of hazardous, or potentially hazardous situations that the motorcycle's 10 rider needs to be aware of. A detailed explanation about riding assistance process is provided herein, inter alia with reference to Figs. 3, 4, 9 and 10.

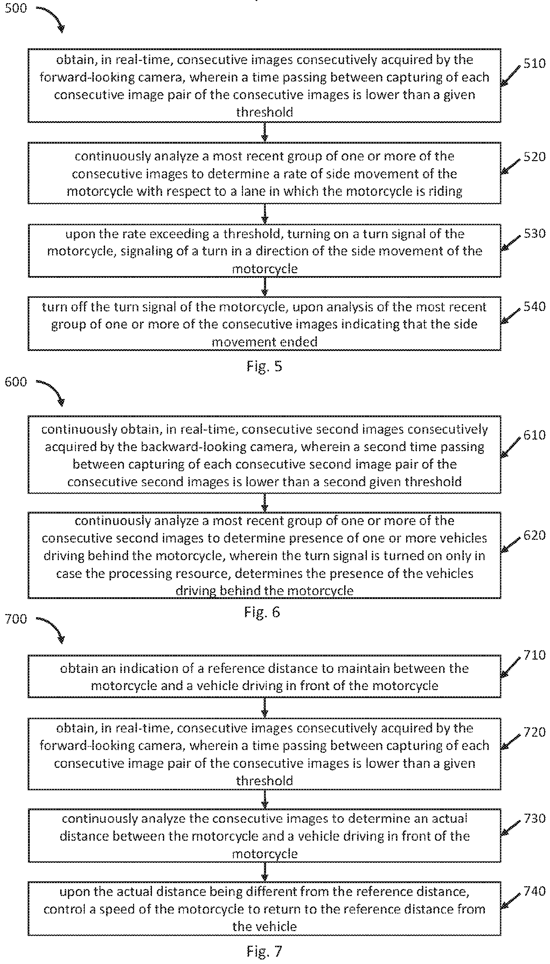

Turn signals control module 230 is configured to automatically control turn signals of the motorcycle 10 upon a determination that they should be turned on/off, as further detailed herein, inter alia with reference to Figs. 5 and 6.

Adaptive cruise control module 240 is configured to provide adaptive cruise control, for enabling a motorcycle 10 to automatically maintain a given distance, or distance range, from a vehicle driving in front of it, as further detailed herein, inter alia with reference to Fig. 7.

Turning to **Fig. 3****,** there is shown a flowchart illustrating one example of a sequence of operations carried out for providing warnings relating to risks in front of a motorcycle to a rider of the motorcycle and/or to other entities, in accordance with the presently disclosed subject matter.

According to some examples of the presently disclosed subject matter, riding assistance system 200 can be configure to perform a forward-camera based riding assistance process 300, e.g. utilizing the riding assistance module 220.

For this purpose, the riding assistance system 200 can be configured to obtain a series of at least two images consecutively acquired by forward-looking camera(s) 120, wherein a time passing between capturing of each consecutive image pair of the images is lower than a given threshold (e.g. 200 milliseconds, or any other threshold that enables determining a current relative speed between a vehicle present within the images and the motorcycle 10) (block 310). In some cases, images are continuously obtained, in real-time also during movement of the motorcycle 10, from the forward-looking camera(s) 120, which obtains the images at its maximal frame rate (or at least at a frame rate that meets the given threshold) as long as the motorcycle's 10 engine is running, or at least as long as the motorcycle is moving.

The riding assistance system 200 analyzes, in real time, at least two of the images of the series obtained at block 310, and preferably at least two most current images of the images in the series, to determine a time-to-collision between the motorcycle 10 and one or more respective objects (block 320). The time-to-collision is indicative of how much time it will take the motorcycle 10 to collide with the object (or to arrive at the object, in case it is, for example, a road curve).

In some cases, the time to collision can be determined by use of images captured by a single forward-looking camera 120, optionally without having knowledge of a distance between the motorcycle 10 and the respective objects. In this type of calculation, each of the respective objects identifiable within each image is assigned with a unique signature that is calculated for the respective object from the image. This signature can be used to track each respective object between subsequently captured images (in which the respective object appears). Each signature correlates to a certain portion of the image in which the respective object appears, while noting that when the relative size of the object within an image becomes smaller, or larger than its relative size in a previous image, the relative size of the portion within the image becomes smaller, or larger, respectively. Due to this fact, monitoring changes in the size of the portion with respect to each image within a sequence of images, can enable determining a time-to-collision between the object that corresponds to the portion and the motorcycle 10. In other words, the time-to-collision with a given object that corresponds to a given portion in an image, can be determined in accordance with a rate of change of the size of a respective portion between subsequently acquired images.

In other cases, the time-to-collision can be determined, for example, by determining (a) a distance between the motorcycle 10 and one or more respective objects (e.g. vehicles, pedestrians, obstacles, road curves, etc.) at least partially visible on at least part of the analyzed subset of consecutive images in the series, and (b) a relative movement between the motorcycle and the respective objects.

The distance and relative movement can be determined, for example, by analyzing the changes between two consecutively acquired images. It is to be noted, however, that the distance and relative movement between the motorcycle 10 and other objects sensed by the sensors of the riding assistance system 200, can be determined in other manners, *mutatis mutandis.* For example, by use of radars, LIDARS, laser range finders, or any other suitable method and/or mechanism that enables determining the distance and relative movement between the motorcycle 10 and other objects sensed by the sensors of the riding assistance system 200.

The distance between the motorcycle 10 and a given object visible in an image can be determined using input from a single forward-looking camera, or using input from two forward-looking cameras:
A. Using two cameras that view the scene in front of the motorcycle 10 can enable determining a distance between the motorcycle 10 and the given object. For this purpose, B is a known distance between the two cameras, f is a known focal length of the cameras, and x and x' are the distances between points in the image plane corresponding to a given point in the scene associated with the object whose distance we want to determine. The distance of the object is calculated as (B*f)/(x-x').
B. Using a single camera: h is a known height of the middle focal plane of the camera from the road on which the motorcycle 10 is riding, f is the known focal length of the camera. The angle of the camera with respect to the road is known, q is half the height of the camera's focal plane. The distance of the object is calculated as (f*h)/q. It can be appreciated that this calculation is based on triangle similarity as within the camera, we have a triangle represented by h and f, which is similar to the triangle external to the camera, which is represented by h and D, where the only unknown is D.

It is to be noted that the time to collision can be determined using other methods and/or techniques, and the methods detailed herein, are mere exemplary implementations.

The riding assistance system 200 generates a warning notification upon the time-to-collision (determined at block 320) being indicative of a threat to the motorcycle (block 330).

It can be appreciated, as indicated with reference to Fig. 1, that many threats exist when riding a motorcycle 10. Some exemplary threats for which a warning notification can be generated include Right Collision Warning of an object (whether an obstacle on the road, another vehicle, a pedestrian, or any other object detectable by the processing module 110) nearing the motorcycle 10 from the right colliding therewith, Left Collision Warning of an object (whether an obstacle on the road, another vehicle, a pedestrian, or any other object detectable by the processing module 110) nearing the motorcycle 10 from the left colliding therewith, Forward Collision Warning (FCW) of the motorcycle 10 colliding with an object (whether an obstacle on the road, another vehicle, a pedestrian, or any other object detectable by the processing module 110) in front of it, Blind Spot Warning (BSW) indicative of presence of an object (whether an obstacle on the road, another vehicle, a pedestrian, or any other object detectable by the processing module 110) at a certain area that the rider of the motorcycle 10 may not be able to see, Road/Lane Keeping Warning (RKW) of the motorcycle 10 not keeping its lane, Distance Keeping Warning (DKW) of the motorcycle 10 not being below a certain distance from an object (whether an obstacle on the road, another vehicle, a pedestrian, or any other object detectable by the processing module 110) in front of it, Lean Angle Warning of the motorcycle 10 lean angle being too acute or not acute enough, Curve Speed Warning (CSW) of the motorcycle 10 approaching a curve at a speed that may result in it failing to pass the curve., or any other threat posed on the motorcycle 10.

As indicated herein, in some cases, the warning notification can be provided to the rider of the motorcycle 10. In such cases, the warning notification can be provided via the lighting system 140, which optionally comprises at least one, and optionally a plurality, of lights visible to the rider of the motorcycle 10 when facing the front of the motorcycle.

The warning notification can be provided by turning on one or more selected lights, or all of the lights, of the lighting system 140, optionally in a pre-determined pattern (e.g. blinking at a given frequency, timing of activation of the lights, turning on different lights of the selected lights, etc.) and/or color (e.g. orange to indicate mild risk threat and red to indicate severe threat). The selected lights (and optionally the pattern and/or the colors) can be selected (e.g. according to pre-defined rules) in accordance with a threat type, and/or severity, of the threat identified at block 330, out of a plurality of threat types and/or severities. In such cases, at least two different threat types are each associated with a distinct combination of selected lights and/or pattern and/or color.

Additionally, or alternatively, to providing a visual warning notification using the lighting system 140, the warning notification can include a sound notification provided to the rider of the motorcycle via one or more speakers. The speakers can be Bluetooth speakers integrated into the helmet of the rider, or any other speakers that generate sounds that can be heard by the rider of the motorcycle 10. In some cases, the sound notification can be a natural language voice notification, providing information of the specific threat type and/or severity identified (e.g. "warning - forward collision risk"). In some cases, the volume can be adjusted in accordance with the risk severity, so that the higher the risk is - the higher the volume of the notification will be.

Additionally, or alternatively, the warning notification can be a vibration provided to the rider of the motorcycle via one or more vibrating elements causing vibration felt by the rider of the motorcycle 10. In some cases, the vibration can be adjusted in accordance with the risk severity, so that the higher the risk is - the stronger the vibration will be. The vibration elements can optionally be integrated into a jacket worn by the rider of the motorcycle 10, into the seat of the motorcycle 10, or into a helmet worn by the rider of the motorcycle 10, however, they can also be provided elsewhere, as long as its vibration is felt by the rider of the motorcycle 10.

Additionally, or alternatively, the warning notification can be a visual notification other than the lighting system 140. For example, the warning notification can be projected, using any suitable projection mechanism, onto a visor of a helmet of the rider of the motorcycle 10 or shown on a display of the motorcycle's 10.

It is to be noted that the above warning notification provisioning systems are mere examples, and the warning notifications can be provided to the rider of the motorcycle 10 in any other manner, as long as the rider is notified of the threat/s.

Having described some warning notification provisioning systems aimed at providing warning notifications to the rider of the motorcycle, attention is now drawn to situations in which a warning notification is provided to a pedestrian or a vehicle other than the motorcycle 10 (being other objects that are sensed by the sensors of the riding assistance system 200 and pose a risk to the motorcycle10), in addition to, or as an alternative to, providing the warning notification to the rider of the motorcycle 10. Some exemplary manners in which a warning notification can be provided to such pedestrian or vehicle other than the motorcycle 10 include (a) turning on at least one light of the motorcycle whether a brake light, a head light, or a turn light, and (b) horning using a horn of the motorcycle or any other horn connected to the riding assistance system 200.

Attention is now drawn to some specific examples of threat types, and the riding assistance system 200 treatment thereof. A first exemplary threat type is a forward collision threat of the motorcycle 10 colliding with one or more of the objects present in front of the motorcycle 10. In such cases, the warning notification can be generated upon the processing module 110 determining that the time-to-collision, being a time expected to pass until the motorcycle collides with the respective object, is lower than a pre-determined threshold time. In case the warning notification is provided via the lighting system 140, a first combination of lights can be turned on, based on the location of the object that poses a threat to the motorcycle 10. For example, if the object is in front of the motorcycle 10 and to the left, one or more lights that are on the left-hand side of the motorcycle 10 (e.g. above the left mirror) can be turned on (optionally at a certain pattern and/or color, as detailed above). If the object is in front of the motorcycle 10 and to the right, one or more lights that are on the right-hand side of the motorcycle 10 (e.g. above the right mirror) can be turned on (optionally at a certain pattern and/or color, as detailed above). If the object is in front of the motorcycle 10 and to the center thereof, both lights that are on the left-hand and on the right-hand sides of the motorcycle 10 (e.g. above the left and right mirror) can be turned on (optionally at a certain pattern and/or color, as detailed above), or alternatively, one or more lights that are placed between the left and right mirrors. It is to be noted that these are mere examples and the warning notification can be provided using other means, *mutatis mutandis.*

Another exemplary threat type is a road/lane keeping threat of the motorcycle 10 failing to keep a road/lane in which the motorcycle 10 is riding due to a curve in the road/lane resulting in a required change of direction of the motorcycle 10. In such cases, the warning notification can be generated upon the processing module 110 determining (e.g. using the distance and the relative movement between the motorcycle and the curve), that a time-to-curve, being a time expected to pass until the motorcycle reaches the curve, is lower than a pre-determined threshold time. In case the warning notification is provided via the lighting system 140, a second combination of lights (other than the first combination of lights that is provided in a forward collision threat) can be turned on, e.g. based on the time-to-curve. For example, if the time-to-curve is less than 3 seconds, one or more lights of the lighting system 140 can be turned on in a yellow color. If the threat still exists when the time-to-curve is less than 2 seconds, the one or more lights of the lighting system 140 can be turned on in an orange color. If the threat still exists when the time-to-curve is less than 1 second, the one or more lights of the lighting system 140 can be turned on in a red color.

Yet another exemplary threat type is a lean angle threat of the motorcycle 10 entering a curve in a lane in which the motorcycle 10 is riding at a dangerous lean angle. In such cases, the warning notification can be generated upon the processing module 110 determining, using information of a current lean angle of the motorcycle, information of an angle of the curve, and a time-to-curve, being a time expected to pass until the motorcycle reaches the curve, that the current lean angle, being a lean angle of the motorcycle with respect to ground, is lower than a first pre-determined threshold or higher than a second pre-determined threshold. In case the warning notification is provided via the lighting system 140, a third combination of lights (other than the first combination of lights that is provided in a forward collision threat) can be turned on, e.g. based on the time-to-curve and/or on the current motorcycle 10 lean angle. For example, if it is determined that the time-to-curve is less than 1.2 seconds, and the current lean angle of the motorcycle 10 is not within the first and second pre-defined thresholds, one or more lights of the lighting system 140 can be turned on in a blinking pattern in a yellow color. If the threat still exists when the time-to-curve is less than 1 second, the one or more lights of the lighting system 140 can be turned on in a blinking pattern in an orange color. If the threat still exists when the time-to-curve is less than 0.8 seconds, the one or more lights of the lighting system 140 can be turned on in a blinking pattern in a red color.

It is to be noted, with respect to the current lean angle of the motorcycle 10, that it can be obtained from an Inertial Measurement Unit (IMU) connected to the motorcycle 10, and/or by analyzing at least two most recent consecutive images acquired by the forward-looking camera(s) 120.

Reference was made herein to provisioning of warning notifications to the rider of the motorcycle 10, and/or to other entities such as pedestrians and/or drivers of other vehicles, other than the motorcycle 10. However, in some cases, in addition to, or as an alternative for, provisioning of warning notifications, the processing module 110 can optionally be configured to perform one or more protective measures upon the time-to-collision (that, as indicated herein, can be determined using various methods and/or techniques) being indicative of the threat to the motorcycle. The protective measures can include, for example, slowing down the motorcycle 10, e.g. by using by using an automated downshifting or its brakes and/or by controlling the motorcycle's 10 throttle (or otherwise controlling the amount of fuel flow to the motorcycle 10 engine) in a manner that is expected to result in slowing the motorcycle 10 down. It is to be noted that in some cases, a protective measure can include increasing the speed of the motorcycle 10, for example when its lean angle is dangerously acute.

It is to be noted that, with reference to Fig. 3, some of the blocks can be integrated into a consolidated block or can be broken down to a few blocks and/or other blocks may be added. It is to be further noted that some of the blocks are optional (e.g. in case of performing one or more protective measures upon identification of a threat, generation of a warning notification at block 330 may be dropped). It should be also noted that whilst the flow diagram is described also with reference to the system elements that realizes them, this is by no means binding, and the blocks can be performed by elements other than those described herein.

**Fig. 4** shows a flowchart illustrating one example of a sequence of operations carried out for providing warnings relating to risks in the back of a motorcycle to a rider of the motorcycle and/or to other entities, in accordance with the presently disclosed subject matter.

According to some examples of the presently disclosed subject matter, riding assistance system 200 can be configure to perform a backward-camera based riding assistance process 400, being similar to, and optionally complement, the riding assistance process 300, e.g. utilizing the riding assistance module 220.

For this purpose, the riding assistance system 200 can be configured to obtain a series of at least two images consecutively acquired by backward-looking camera(s) 130, wherein a time passing between capturing of each consecutive image pair of the images is lower than a given threshold (e.g. 200 milliseconds, or any other threshold that enables determining a current relative speed between a vehicle present within the images and the motorcycle 10) (block 410). In some cases, images are continuously obtained, in real-time also during movement of the motorcycle 10, from the backward-looking camera(s) 130, which obtains the images at its maximal frame rate (or at least at a frame rate that meets the given threshold) as long as the motorcycle's 10 engine is running, or at least as long as the motorcycle is moving.

The riding assistance system 200 analyzes, in real time, at least two of the images of the series obtained at block 410, and preferably at least two most current images of the images in the series, to determine a time-to-collision between the motorcycle 10 and one or more respective objects (block 420). The time-to-collision is indicative of how much time it will take the object to collide with the motorcycle 10.

In some cases, the time-to-collision can be determined by use of images captured by a single backward-looking camera 130, optionally without having knowledge of a distance between the motorcycle 10 and the respective objects. In this type of calculation, each of the respective objects identifiable within each image is assigned with a unique signature that is calculated for the respective object from the image. This signature can be used to track each respective object between subsequently captured images (in which the respective object appears). Each signature correlates to a certain portion of the image in which the respective object appears, while noting that when the relative size of the object within an image becomes smaller, or larger than its relative size in a previous image, the relative size of the portion within the image becomes smaller, or larger, respectively. Due to this fact, monitoring changes in the size of the portion with respect to each image within a sequence of images, can enable determining a time-to-collision between the object that corresponds to the portion and the motorcycle 10. In other words, the time-to-collision with a given object that corresponds to a given portion in an image, can be determined in accordance with a rate of change of the size of a respective portion between subsequently acquired images.

In other cases, the time-to-collision can be determined, for example, by determining (a) a distance between the motorcycle 10 and one or more respective objects (e.g. vehicles, pedestrians, obstacles, road curves, etc.) at least partially visible on at least part of the analyzed subset of consecutive images in the series, and (b) a relative movement between the motorcycle and the respective objects. The distance and relative movement can be determined, for example, by analyzing the changes between two consecutively acquired images. It is to be noted, however, that the distance and relative movement between the motorcycle 10 and other objects sensed by the sensors of the riding assistance system 200, can be determined in other manners, *mutatis mutandis.* For example, by use of radars, LIDARS, laser range finders, or any other suitable method and/or mechanism that enables determining the distance and relative movement between the motorcycle 10 and other objects sensed by the sensors of the riding assistance system 200.

It is to be noted that the time to collision can be determined using other methods and/or techniques, and the methods detailed herein, are mere exemplary implementations.

The riding assistance system 200 generates a warning notification upon the time to collision (determined at block 420) being indicative of a threat to the motorcycle 10 (block 430).

One exemplary threat type is a backward collision threat of a vehicle, other than the motorcycle 10, colliding with the motorcycle 10 from the rear-end side. In such cases, the warning notification can be generated upon the processing module 110 determining, e.g. using the time-to-collision determined at block 420, being a time expected to pass until the other vehicle collides with the motorcycle 10, is lower than a pre-determined threshold time. In such case, the riding assistance system 200 can activate the brake light and/or turn lights of the motorcycle 10, optionally at a certain pattern and/or color, so that a driver of the vehicle that poses a threat to the motorcycle (by colliding therewith) will be notified of it being a threat. Additionally, or alternatively, the riding assistance system 200 can use the horn of the motorcycle 10 to provide the driver of the vehicle that poses a threat to the motorcycle 10 (by colliding therewith) with a sound notification that may attract his attention to the fact that it poses a threat to the motorcycle 10. It is to be noted that in some cases, the riding assistance system 200 can use dedicated light(s) and/or horn(s) instead of using the light(s) and/or horn(s) of the motorcycle 10 (e.g. it cannot connect to the motorcycle 10 CAN bus for controlling the light(s) and/or horn(s) of the motorcycle 10).

In some cases, in addition to, or as an alternative for, providing warning notifications to the driver of the vehicle that poses a threat to the motorcycle 10 (by colliding therewith), a warning notification can also be provided to the rider of the motorcycle 10. In such case, the warning notification can be provided via the lighting system 140, where a first combination of lights can be turned on, based on the location of the vehicle that poses a threat to the motorcycle 10. For example, if the vehicle is in the back of the motorcycle 10 and to the left, one or more lights that are on the left-hand side of the motorcycle 10 (e.g. above the left mirror) can be turned on (optionally at a certain pattern and/or color, as detailed above). If the object is in the back of the motorcycle 10 and to the right, one or more lights that are on the right-hand side of the motorcycle 10 (e.g. above the right mirror) can be turned on (optionally at a certain pattern and/or color, as detailed above). If the object is in the back of the motorcycle 10 and to the center thereof, both lights that are on the left-hand and on the right-hand sides of the motorcycle 10 (e.g. above the left and right mirror) can be turned on (optionally at a certain pattern and/or color, as detailed above), or alternatively, one or more lights that are placed between the left and right mirrors. It is to be noted that these are mere examples and the warning notification can be provided using other means, *mutatis mutandis.*

Another exemplary threat type relates to presence of an object (e.g. a vehicle other than the motorcycle 10) in a blind spot of the rider of the motorcycle 10. A blind spot is a certain area on the right-hand side and on the left-hand side of the motorcycle 10 that is invisible to the rider of the motorcycle 10 when the rider is looking forward. In some cases, the blind spot can be defined by a certain range of angles with respect to the line extending from the front of the motorcycle. For example, the right-side blind spot can be defined as the angle range 35°-120° and the left-side blind spot can be defined as the angle range 215°-300°. When a threat exists in a blind spot of the motorcycle 10, the warning notification can be provided via the lighting system 140, where a first combination of lights can be turned on, in accordance with the side in which the threat exists. If the threat is on the left-hand side of the motorcycle 10, lights at the left-hand side of the lighting system 140 can be turned on (optionally at a certain pattern and/or color, as detailed above). If the threat is on the right-hand side of the motorcycle 10, lights at the right -hand side of the lighting system 140 can be turned on (optionally at a certain pattern and/or color, as detailed above).

It is to be noted that objects that are identified by the backward-looking camera(s) 130 can later become objects that are identified by the forward-looking camera(s) 120, e.g. as such objects move faster than the motorcycle 10. Similarly, objects that are identified by the forward-looking camera(s) 120 can later become objects that are identified by the backward-looking camera(s) 130, e.g. as the motorcycle 10 moves faster than such objects. Presence of both forward-looking camera(s) 120 and backward-looking camera(s) 130 therefore enable a coverage of a large area around the motorcycle, that can provide 360° protection to the rider of the motorcycle 10, as in at least some configurations of the riding assistance system 200 the forward-looking camera(s) 120 and backward-looking camera(s) 130 can be set so that when a vehicle is driving next to the motorcycle 10, within a certain range therefrom (e.g. up to three meters, or even five meters, from the motorcycle 10), the forward-looking camera(s) 120 capture images that include at least a front of the vehicle and the backward-looking camera(s) 130 capture images that include at least a back of the vehicle, so that there is always coverage of any vehicle (by capturing at least part thereof by at least one of the forward-looking camera(s) 120 and backward-looking camera(s) 130) within the protected range.

It is to be noted that, with reference to Fig. 4, some of the blocks can be integrated into a consolidated block or can be broken down to a few blocks and/or other blocks may be added. It is to be further noted that some of the blocks are optional (e.g. in case of performing one or more protective measures upon identification of a threat, similarly to those described in the context of Fig. 3, generation of a warning notification at block 430 may be dropped). It should be also noted that whilst the flow diagram is described also with reference to the system elements that realizes them, this is by no means binding, and the blocks can be performed by elements other than those described herein.

Turning to **Fig. 5****,** there is shown a flowchart illustrating one example of a sequence of operations carried out for automatic control of turn signals of a motorcycle, in accordance with the presently disclosed subject matter.

According to some examples of the presently disclosed subject matter, riding assistance system 200 can be configure to perform a turn signal control process 500, e.g. utilizing the turn signals control module 230.

For this purpose, the riding assistance system 200 can be configured to obtain, in real-time, consecutive images consecutively acquired by the forward-looking camera(s) 120, wherein a time passing between capturing of each consecutive image pair of the consecutive images is lower than a given threshold (e.g. 200 milliseconds, or any other threshold that enables determining a current relative speed between a vehicle present within the images and the motorcycle 10) (block 510). In some cases, images are continuously obtained, in real-time also during movement of the motorcycle 10, from the forward-looking camera(s) 120, which obtains the images at its maximal frame rate (or at least at a frame rate that meets the given threshold) as long as the motorcycle's 10 engine is running, or at least as long as the motorcycle is moving.

The riding assistance system 200 is further configured to analyze, in real time, a most recent group of one or more of the consecutive images obtained at block 510, to determine a direction and/or a rate of side movement of the motorcycle 10 with respect to a lane in which the motorcycle 10 is riding (block 520). The direction and/or rate of movement can be determined by analyzing the images and identifying the distance of the motorcycle 10 from lane markings on the road. Naturally, as the motorcycle 10 begins to turn, it starts to move towards the lane markings (on its left or right hand side, according to its turn direction), and in this manner, a direction and/or a rate of movement can be determined by image analysis. It is to be noted however, that the direction and/or rate of movement can be determined using other methods and/or techniques, including, for example, using information obtained from an IMU connected to the motorcycle 10, along with information of the motorcycle 10 speed in order to derive the direction and/or rate of movement.

upon the rate exceeding a threshold, riding assistance system 200 is configured to turn on a turn signal of the motorcycle, signaling of a turn in a direction of the side movement of the motorcycle 10 (block 530). Upon a determination that the side movement ended, the riding assistance system 200 can turn off the turn signal of the motorcycle 10. The determination that the side movement ended can be made using analysis of images acquired by the forward-looking camera(s) 120, and/or using information obtained from the motorcycle's 10 IMU.

It is to be noted that, with reference to Fig. 5, some of the blocks can be integrated into a consolidated block or can be broken down to a few blocks and/or other blocks may be added. It is to be further noted that some of the blocks are optional. It should be also noted that whilst the flow diagram is described also with reference to the system elements that realizes them, this is by no means binding, and the blocks can be performed by elements other than those described herein.

**Fig. 6** is a flowchart illustrating one example of a sequence of operations carried out for selective activation of turn signals of a motorcycle, in accordance with the presently disclosed subject matter.

According to some examples of the presently disclosed subject matter, riding assistance system 200 can be configure to perform a selective turn signal control process 600, e.g. utilizing the turn signals control module 230. The selective turn signal control process 600 can complement the turn signal control process 500, in order to enable turning the turn signals on only when presence of a vehicle at the back of the motorcycle 10 is determined.

For this purpose, the riding assistance system 200 can be configured to continuously obtain, in real-time, consecutive images consecutively acquired by the backward-looking camera(s) 130, wherein a time passing between capturing of each consecutive image pair of the consecutive images is lower than a given threshold (e.g. 200 milliseconds, or any other threshold that enables determining a current relative speed between a vehicle present within the images and the motorcycle 10) (block 510).

the riding assistance system 200 is further configured to continuously analyze a most recent group of one or more of the consecutive images obtained at block 610, to determine presence of one or more vehicles driving behind the motorcycle 10 (block 620). According to the determination, a decision can be made, whether to turn on the turn signal or not at block 530, so that the turn signal is only turned on upon a determination of presence of one or more vehicles driving behind the motorcycle 10.

It is to be noted that, with reference to Fig. 6, some of the blocks can be integrated into a consolidated block or can be broken down to a few blocks and/or other blocks may be added. It should be also noted that whilst the flow diagram is described also with reference to the system elements that realizes them, this is by no means binding, and the blocks can be performed by elements other than those described herein.

At **Fig. 7****,** there is shown a flowchart illustrating one example of a sequence of operations carried out for providing adaptive cruise control for a motorcycle, in accordance with the presently disclosed subject matter.

According to some examples of the presently disclosed subject matter, riding assistance system 200 can be configure to perform an adaptive cruise control process 700, e.g. utilizing the adaptive cruise control module 240.

For this purpose, the riding assistance system 200 can be configured to obtain an indication of a reference distance to maintain between the motorcycle 10 and any vehicle driving in front of the motorcycle 10 (block 710). The indication can be provided by the rider providing a trigger, being an instruction to start an adaptive cruise control process, e.g. via an input device of the motorcycle 10, such as a dedicated button, or any other input device. Upon receipt of such instruction, the riding assistance system 200 can determine the reference distance using reference distance determination images captured by the forward-looking camera(s) 120 up to a pre-determined time before or after the rider of the motorcycle providing the trigger (e.g. up to 0.5 seconds before and/or after the trigger is initiated).

Riding assistance system 200 is configured to obtain, in real-time, consecutive images consecutively acquired by the forward-looking camera(s) 120, wherein a time passing between capturing of each consecutive image pair of the consecutive images is lower than a given threshold (e.g. 200 milliseconds, or any other threshold that enables determining a current relative speed between a vehicle driving in front of the motorcycle 10 and the motorcycle 10) (block 720).

The riding assistance system 200 continuously analyzes the consecutive images obtained at block 720 to determine an actual distance between the motorcycle 10 and a vehicle driving in front of the motorcycle 10 (block 730), and upon the actual distance being different from the reference distance, riding assistance system 200 controls (increases/decreases) a speed of the motorcycle 10 (e.g. by controlling the motorcycle's 10 throttle (or otherwise controlling the amount of fuel flow to the motorcycle 10 engine), brakes, shifts, etc., in a manner that is expected to result in a change of the motorcycle 10 speed) to return to the reference distance from the vehicle (block 740).

It is to be noted that, with reference to Fig. 7, some of the blocks can be integrated into a consolidated block or can be broken down to a few blocks and/or other blocks may be added. It should be also noted that whilst the flow diagram is described also with reference to the system elements that realizes them, this is by no means binding, and the blocks can be performed by elements other than those described herein.

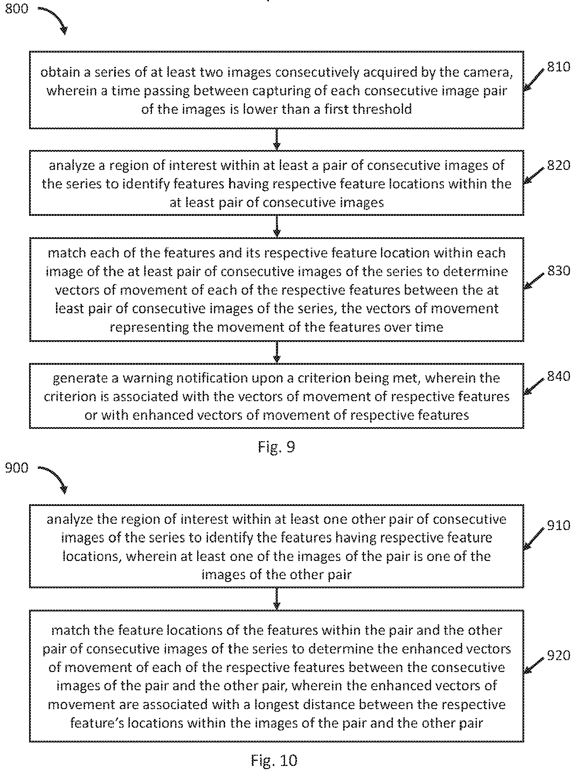

Turning to **Fig. 9****,** there is shown a flowchart illustrating an example of a sequence of operations carried out for providing warnings relating to risks of side collisions to a rider of the motorcycle and/or to other entities, in accordance with the presently disclosed subject matter.

According to some examples of the presently disclosed subject matter, riding assistance system 200 can be configure to perform a side collision detection process 800, e.g. utilizing the riding assistance module 220.

For this purpose, the riding assistance system 200 can be configured to obtain a series of at least two images consecutively acquired by forward-looking camera(s) 120, wherein a time passing between capturing of each consecutive image pair of the images is lower than a given threshold (e.g. 200 milliseconds, or any other threshold that enables determining a current relative speed between a vehicle present within the images and the motorcycle 10) (block 310). In some cases, images are continuously obtained, in real-time also during movement of the motorcycle 10, from the forward-looking camera(s) 120, which obtains the images at its maximal frame rate (or at least at a frame rate that meets the given threshold) as long as the motorcycle's 10 engine is running, or at least as long as the motorcycle is moving. It is to be noted that in some cases, at least one angle of the motorcycle 10 with respect to the road changes between capturing at least a pair of consecutive images.

The riding assistance system 200 analyzes, optionally in real-time, a region of interest (that is optionally non-continuous) within at least a pair of consecutive images of the series to identify features having respective feature locations within the at least pair of consecutive images.

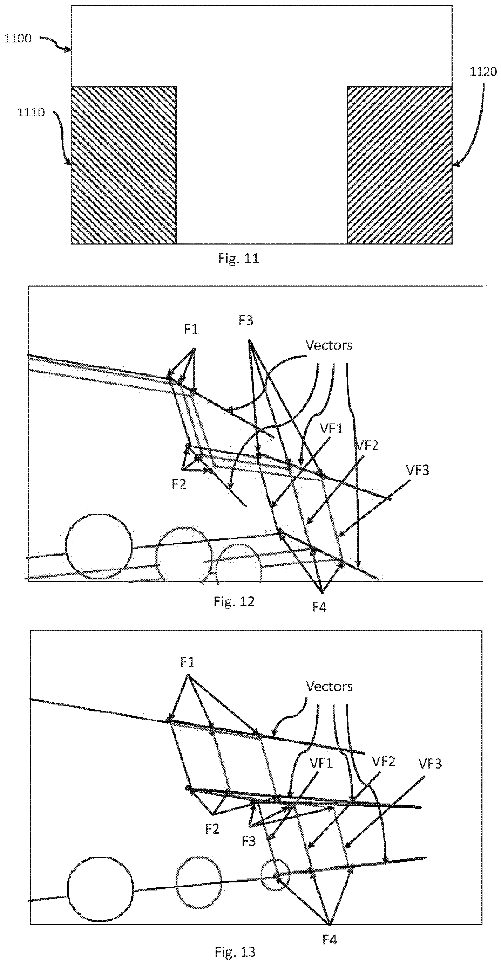

In some cases, the region of interest can be a sub-portion of each image of the pair of consecutive images. It can be a part of the images that does not include at least part of the upper portion of the images (e.g. a certain portion of the images above the skyline shown therein, which can optionally be cropped), and optionally does not include at least part of the image between a left-most part thereof and a right-most part thereof. An exemplary region of interest is shown in Fig. 11, where an exemplary frame 1100 is shown, having a non-continuous region of interest comprised of two parts, one on the bottom left hand side of the frame marked 1110, and a second on the bottom right hand side of the frame, marked 1120. This region of interest (comprised of 1110 and 1120) is relevant when trying to detect potential threats to the motorcycle from side collisions. The part of the region marked 1110 is for detecting potential side collision threats from the left-hand side of the motorcycle 10 and the part of the region marked 1120 is for detecting potential side collision threats from the right-hand side of the motorcycle 10. It is to be noted that this is a mere example, and the proportions of the region of interest (1110 and 1120) are drawn for illustrative purposes only. The scales within the figure are also exemplary and, in some cases, they can be different than shown in the figure. It is to be noted that when reference is made herein to a region of interest that is non-continuous, each continuous portion of the non-continuous region of interest can be regarded as a separate continuous region of interest *mutatis mutandis.*

Returning to the side collision detection process 800, and to block 820, the riding assistance system 200 analyzes the region of interest within at least a pair of consecutive images to identify features having respective feature locations within the at least pair of consecutive images. Features can be identified in each frame using known feature identification methods and/or techniques, or using proprietary methods and/or techniques. According to the presently disclosed subject matter, the features can be features associated with cars, trucks, or other types of vehicles. Exemplary features can include corners of vehicles, specific parts of vehicles (e.g. wheels, mirrors, headlights, license plates, blinkers, bumpers, etc.), etc.

The riding assistance system 200 matches each of the features and its respective feature location within each image of the at least pair of consecutive images of the series to determine vectors of movement of each of the respective features between the at least pair of consecutive images of the series, the vectors of movement representing the movement of the features over time (the time between capturing the analyzed images) (block 830). The features can be matched using L² function and/or nearest neighbor algorithm.

Riding assistance system 200 can be further configured to generate a warning notification upon a criterion being met, wherein the criterion is associated with the vectors of movement of respective features or with enhanced vectors of movement of respective features (noting that a detailed explanation about enhanced vectors of movement is provided herein with reference to Fig. 12) (block 840).

In some cases, the criterion can be that a number of the vectors of movement of respective features being in a collision course with a direction of the motorcycle 10 exceeds a threshold. In an alternative embodiment, the criterion can be that an average vector, being a vector representing the average of the vectors of movements, is in a collision course with a direction of the motorcycle 10. In some cases, the riding assistance system 200 can be further configured to estimate a trajectory of each of the features and identify an intersection point of the estimated trajectories, and in such cases, the criterion can be met when the intersection is within a pre-defined area within a given image of the series of images obtained at block 810. In some cases, the riding assistance system 200 can be further configured to determine a mean value of optical flow in a vertical direction towards the motorcycle 10 within at least one region of interest (other than the region of interest analyzed at block 820) within the pair of consecutive images of the series, and in such cases, the criterion can be met when the mean value of optical flow exceeds an allowed mean optical flow threshold (that can optionally be pre-defined).

In some cases, although not shown in the figure, the riding assistance system 200 can be further configured to estimate a likelihood of presence of a vehicle associated with at least some of the features within a given image of the at least pair of consecutive images of the series, and in such cases, the warning notification is generated only if the likelihood is above a corresponding threshold. In some cases, the estimation of the likelihood of presence of a vehicle associated with at least some of the features within a given image can be performed using a convolutional neural network.

As indicated herein, in some cases, the warning notification generated at block 840 can be provided to the rider of the motorcycle 10. In such cases, the warning notification can be provided via the lighting system 140, which optionally comprises at least one, and optionally a plurality, of lights visible to the rider of the motorcycle 10 when facing the front of the motorcycle.

The warning notification can be provided by turning on one or more selected lights, or all of the lights, of the lighting system 140, optionally in a pre-determined pattern and/or color to indicate the side collision threat. The selected lights (and optionally the pattern and/or the colors) can be selected (e.g. according to pre-defined rules) in accordance with a direction of the side collision threat (right or left), and/or severity of the threat identified at block 840.

Additionally, or alternatively, to providing a visual warning notification using the lighting system 140, the warning notification can include a sound notification provided to the rider of the motorcycle via one or more speakers. The speakers can be Bluetooth speakers integrated into the helmet of the rider, or any other speakers that generate sounds that can be heard by the rider of the motorcycle 10. In some cases, the sound notification can be a natural language voice notification, providing information of the direction of the threat and/or its severity (e.g. "warning - left side collision"). In some cases, the volume can be adjusted in accordance with the risk severity, so that the higher the risk is - the higher the volume of the notification will be.

Additionally, or alternatively, the warning notification can be a vibration provided to the rider of the motorcycle via one or more vibrating elements causing vibration felt by the rider of the motorcycle 10. In some cases, the vibration can be adjusted in accordance with the risk severity, so that the higher the risk is - the stronger the vibration will be. The vibration elements can optionally be integrated into a jacket worn by the rider of the motorcycle 10, into the seat of the motorcycle 10, or into a helmet worn by the rider of the motorcycle 10, however, they can also be provided elsewhere, as long as its vibration is felt by the rider of the motorcycle 10.

Additionally, or alternatively, the warning notification can be a visual notification other than the lighting system 140. For example, the warning notification can be projected, using any suitable projection mechanism, onto a visor of a helmet of the rider of the motorcycle 10 or shown on a display of the motorcycle's 10.

It is to be noted that the above warning notification provisioning systems are mere examples, and the warning notifications can be provided to the rider of the motorcycle 10 in any other manner, as long as the rider is notified of the threat/s.

Having described some warning notification provisioning systems aimed at providing warning notifications to the rider of the motorcycle 10, attention is now drawn to situations in which a warning notification is provided to the vehicle that poses a threat to the motorcycle 10, in addition to, or as an alternative to, providing the warning notification to the rider of the motorcycle 10. An exemplary manner in which a warning notification can be provided to such vehicle other than the motorcycle 10 include horning using a horn of the motorcycle or any other horn connected to the riding assistance system 200.

It is to be noted that, with reference to Fig. 9, some of the blocks can be integrated into a consolidated block or can be broken down to a few blocks and/or other blocks may be added. It is to be further noted that some of the blocks are optional. It should be also noted that whilst the flow diagram is described also with reference to the system elements that realizes them, this is by no means binding, and the blocks can be performed by elements other than those described herein.

Looking at **Fig. 10****,** there is shown a flowchart illustrating an example of a sequence of operations carried out for determining enhanced vectors of motion, in accordance with the presently disclosed subject matter.

According to some examples of the presently disclosed subject matter, riding assistance system 200 can be configure to perform an enhanced vectors of motion determination process 900, e.g. utilizing the riding assistance module 220.

For this purpose, the riding assistance system 200 can be configured to analyze the region of interest within at least one other pair of consecutive images of the series, other than the pair analyzed in block 820, to identify the features having respective feature locations, wherein at least one of the images of the pair analyzed in block 820 is one of the images of the other pair (block 910). Accordingly, three consecutive images are analyzed to identify the features therein.

The riding assistance system 200 matches the feature locations of the features within the pair and the other pair of consecutive images of the series to determine the enhanced vectors of movement of each of the respective features between the consecutive images of the pair and the other pair, wherein the enhanced vectors of movement are associated with a longest distance between the respective feature's locations within the images of the pair and the other pair (block 920). Accordingly, if a given feature is identified in all three analyzed images, the enhanced vector is the one connecting the feature in the least recent image of the three and the same feature in the most recent image of the three. If the feature is not identified in all three images, a vector is generated connecting each feature that is identified in two of the three images.

The vectors generated at block 920 can be used by the riding assistance system 200 at block 840 for the purpose of providing a warning notification if so determined according to block 840.

It is to be noted that, with reference to Fig. 10, some of the blocks can be integrated into a consolidated block or can be broken down to a few blocks and/or other blocks may be added. It should be also noted that whilst the flow diagram is described also with reference to the system elements that realizes them, this is by no means binding, and the blocks can be performed by elements other than those described herein.

Attention is drawn to **Fig. 12****,** showing a schematic illustration of a sequence of frames illustrating a threat to a motorcycle, in accordance with the presently disclosed subject matter, and to **Fig. 13****,** showing a schematic illustration of a sequence of frames illustrating a non-threat to a motorcycle, in accordance with the presently disclosed subject matter.

In Fig. 12, a part of a vehicle within the region of interest in three consecutive frames is shown. The region of interest in the illustrated example is the lower left hand side of the images captured by the forward looking camera 120, which corresponds to an area on the left-hand side of the motorcycle 10 (e.g. the region marked 1110 in Fig. 11 showing an exemplary image/frame). VF1 marks the vehicle in the first frame, VF2 marks the vehicle in the second frame and VF3 marks the vehicle in the third frame. Features are identified in each frame, and matched between frames, for example using known feature identification methods and techniques. F1 marks a first feature, F2 marks a second feature, F3 marks a third feature and F4 marks a fourth feature, across all frames. For each feature, a vector is generated connecting the earliest feature location of the respective feature with its latest feature location. In the illustration provided in Fig. 12, it can be appreciated that all of the generated vectors are pointing at a direction that is in a collision course with the motorcycle 10, as all vectors point at a location that is on the course of the motorcycle 10.

Looking at Fig. 13 on the other hand, it can be appreciated that the vectors are not all pointing at a direction that is in a collision course with the motorcycle 10, and some vectors point at a location that is not on the course of the motorcycle 10 (which is clearly evident when looking at the vector connecting F4, which is pointing outwards from the motorcycle's 10 course).

Accordingly, Fig. 12 illustrates a threatening scenario for which a warning notification should be provided at block 840, whereas Fig. 13 illustrates a non-threatening scenario for which a warning notification should not be provided at block 840.

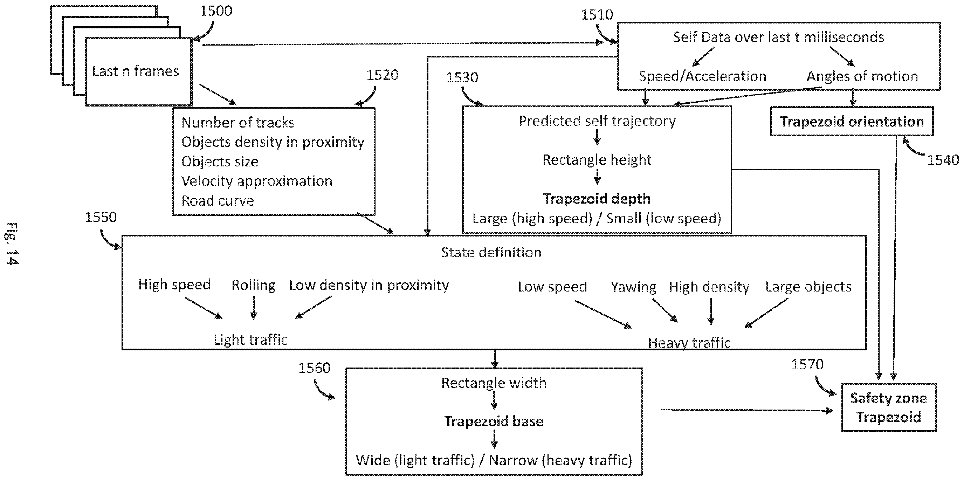

Turning to **Fig. 14****,** there is shown a flowchart illustrating an example of a sequence of operations carried out for determining a safety zone, in accordance with the presently disclosed subject matter.

According to some examples of the presently disclosed subject matter, riding assistance system 200 can be configured to perform safety zone determination process as illustrated in Fig. 14, e.g. utilizing the riding assistance module 220.

Riding assistance module 220 can be configured to detects objects in the roadway ahead of the motorcycle 10, and evaluate whether the rider of the motorcycle 10 is riding at a safe distance and speed relative to the objects ahead. Riding assistance module 220 can be further configured to warn the rider of the motorcycle 10 if either the distance and/or relative speed thereof, with respect of any detected objects, become unsafe, i.e. when one or more of the detected objects becomes a collision risk. In order to evaluate if any object poses a risk to the motorcycle 10, a Forward Collision Safety Zone is determined. Forward Collision Safety Zone is a rectangle just ahead of the motorcycle 10. The height and width of this rectangle depend on the motorcycle's 10 speed, position, angles of motion (pitch and/or roll and/or yaw), acceleration, density of objects around the motorcycle 10 and the speed of such objects (in case they are moving objects), the orientation of the rectangle depends on the motorcycle's 10 angles of motion, the road curve, and traffic state in the vicinity of the motorcycle 10. When using a camera (such as forward-looking camera 120) for obtaining information of the environment of the motorcycle 10, due to perspective view, this rectangle becomes a trapezoid in the camera's image plane.

The Forward Collision Safety Zone that is determined at block 1570 is a dynamic trapezoid in the image plane that is constructed from a truncated triangle. The width of this triangle base varies dynamically from the entire image width (of the image captured by the camera, such as forward-looking camera 120) when objects density around the motorcycle 10 is low to the narrow corridor just enough for the motorcycle 10 to pass between the detected objects when there is a heavy traffic around.

When the motorcycle 10 and the surrounding detected objects are moving at predefined high speed, e.g., more than 60 km/h, the safety zone is both wider (due to possible fast and sudden entry of other object/s into it) and deeper (fast movement due to the self-speed of the motorcycle) up to a level of a full triangle.

In a case of heavy traffic when the motorcycle 10 is maneuvering between slowly (predefined speed) moving objects, e.g., their speed is less than 15 km/h, being in safety zone means that there is a path between the objects through which the motorcycle 10 can pass. In opposite to four wheelers in traffic that can only move in a line one after another (the lane boundaries), the motorcycle 10 has the ability to ride in between slowly moving vehicles lines. This movement is characterized by frequent changes in roll and yaw angles. In this case two predictive paths are defined, one according to the current motion heading and another one according to the possible path between the vehicles. At times these paths might differ significantly from each other, e.g. when a motorcycle 10 is rotating (yawing) his handlebar while moving at low speed, e.g., less than 20-30 km/h.

Fig. 14 shows a flowchart illustrating an example of a sequence of operations carried out to define a safety zone in front of a motorcycle 10, however the teachings herein are also applicable for determining a safety zone behind the motorcycle 10.

For this purpose, riding assistance system 200 obtains, as input, a sequence of at least two images consecutively acquired by forward-looking camera(s) 120, wherein a time passing between capturing of each consecutive image pair of the images is lower than a given threshold (e.g. 200 milliseconds, or any other threshold that enables determining a current relative speed between a vehicle present within the images 1500 and the motorcycle 10).

The convolutional network is applied to the images 1500, and all the objects in the region of interest are found. The trajectory of each of these objects in the proximity of the motorcycle 10 is approximated.

In some cases, the riding assistance system 200 can analyze the images obtained at block 1500 and determine the number of tracks (e.g., vehicles) on a road on which the motorcycle 10 rides, optionally the density of the objects (e.g. vehicles) in the proximity of the motorcycle 10, optionally the direction of the objects on the road, the speed of the objects on the road, the size of the objects on the road, optionally the road curve, and optionally other information that can be determined by analysis of the images obtained at block 1500 (block1520).

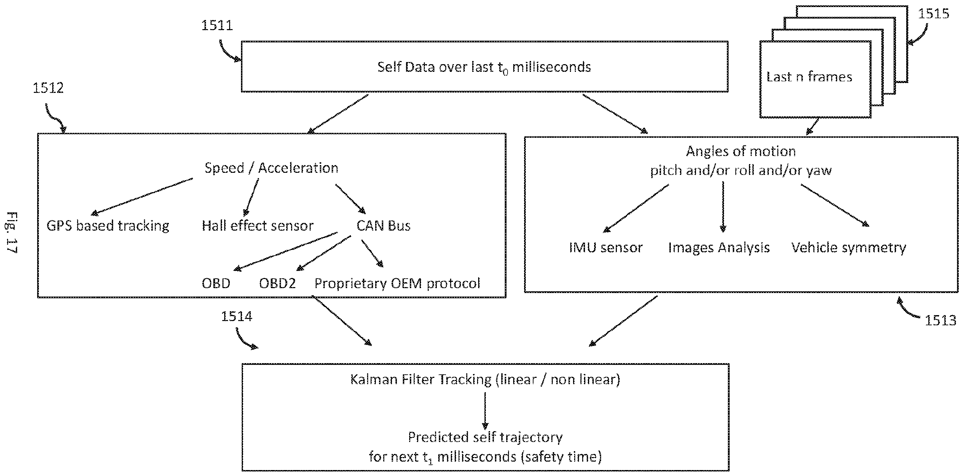

On the other hand, riding assistance system 200 obtains, as additional input, a sequence of self-measurements (e.g. speed and/or acceleration and/or angles of motion of the motorcycle 10) (blocks 1510). In some cases, these angles can be acquired by one or more sensors as further explained below in Fig. 17, wherein a time passing lower than a given threshold (e.g. 200 milliseconds, or any other threshold that enables determining a current motorcycle 10 speed and/or position and/or acceleration). In some cases, in addition to determining the angles of motion based on input other than the images obtained at block 1500, the motorcycle's 10 angles of motion can be obtained by analysis of the images in the sequence of at least two images obtained at block 1500, using known method and/or techniques.

A motorcycle predictive trajectory 1530, as further explained below in Fig. 17, defines how far ahead of the motorcycle the safety zone should be, and, thus, it defines a trapezoid depth 1530. Predefined higher speed, e.g., more than 60 km/h, leads to a longer trapezoid, while predefined lower speed, e.g., less than 20 km/h, leads to a shorter trapezoid.

The triangle vertex is a current vanishing point rotated according to the roll and/or yaw and/or pitch angles 1540. The initial vanishing point is defined at the initial calibration step by finding a point at which the real-world parallel lines intersect in the image. During the initial calibration step yaw and pitch angles are set to zero. The following transformations are applied to the initial vanishing point: rotation at roll angle around an image bottom middle point and/or translation in x direction due to the yaw angle and/or translation in y direction due to the pitch angle.

In some cases, road curve updates the trapezoid orientation 1540, i.e. the vanishing point (static or rotated by angles of motion as described above) is moved to the location where the road curve ahead of the motorcycle 10 leads.

In some cases, based on blocks 1520, 1530, and 1540, the current traffic state 1550 around the motorcycle 10 is defined. The traffic state 1550 might vary from a light traffic to a traffic congestion. For example, if the motorcycle's 10 self-speed is relatively high, objects' density is low (e.g., less than two vehicles), and there exists motorcycle rolling (e.g., more than 10°) wherein a certain time period (e.g., during 10 previous seconds), then this is a light traffic state, e.g. a highway. On the other hand, if the speed is low, objects density is high (e.g., more than two vehicles), objects appear large and close, there exists a motorcycle yawing (e.g., more than 6°) wherein a certain time period (e.g., during 10 previous seconds), then this is a heavy traffic state, e.g. traffic jam.

According to the traffic state 1550, the trapezoid/triangle base width 1560 is defined. For example, in a light traffic the trapezoid/triangle base width should be wide, up to the entire image width (of the image captured by the camera, such as forward-looking camera 120), while in a heavy traffic this base should be narrow. In some cases, the lighter the traffic is, the wider the triangle base is, and vice versa.

In some cases, the triangle is truncated according to the motorcycle 10 predictive path as further explained in Fig. 17. A motorcycle 10 predicted position after the next number of seconds (safety time, e.g. 1.5 seconds), if needed, is projected onto the camera image plane using the camera internal parameters to define the y-coordinate of triangle truncation.

Now the trapezoid is defined. This trapezoid is dynamically updated at each time step according to the motorcycle 10 predictive path, traffic state, surrounding vehicles density, self-data (speed / acceleration / angles of motion), other vehicles speed, road curves, etc.

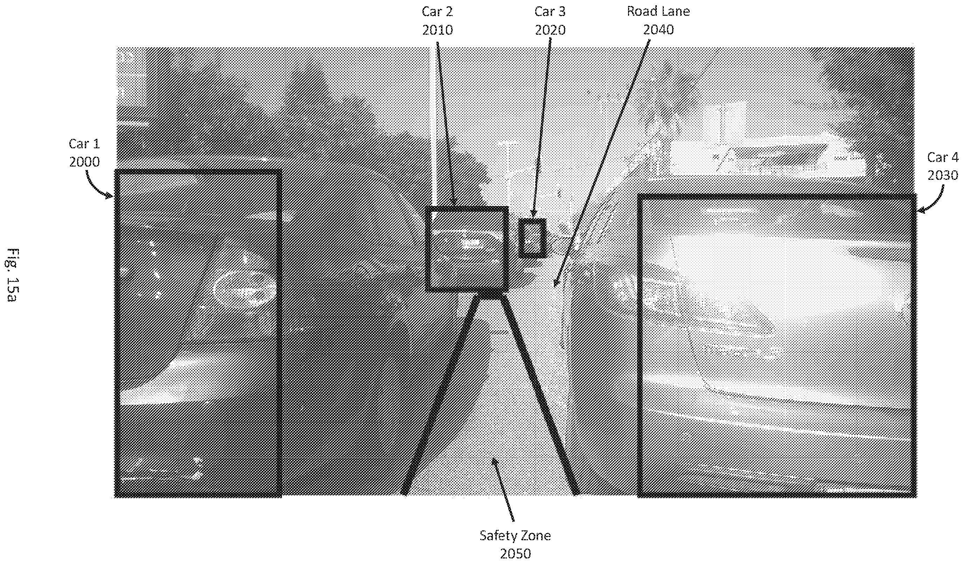

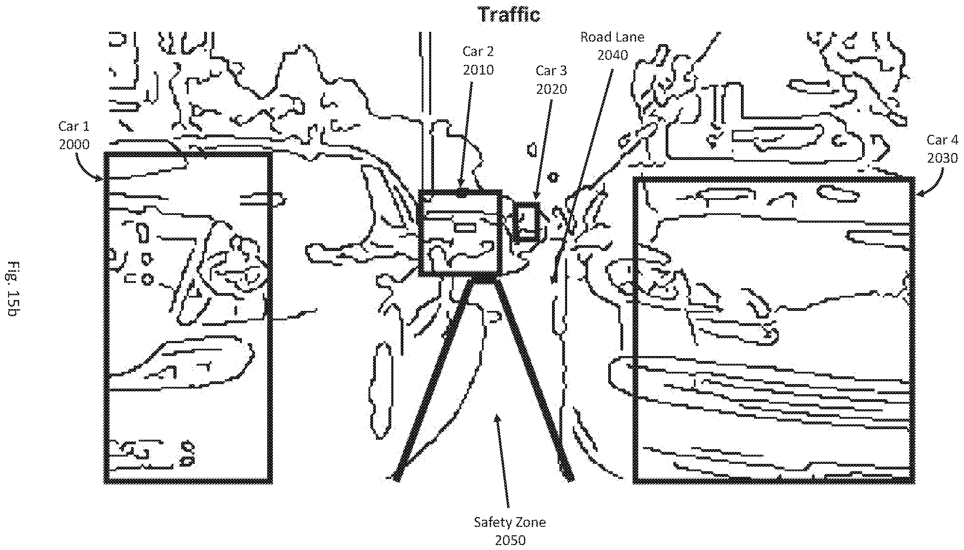

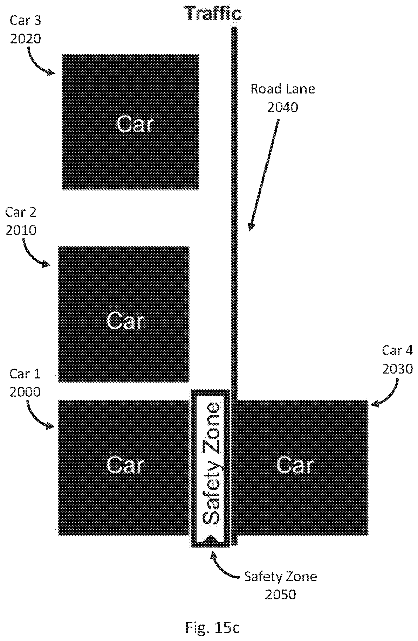

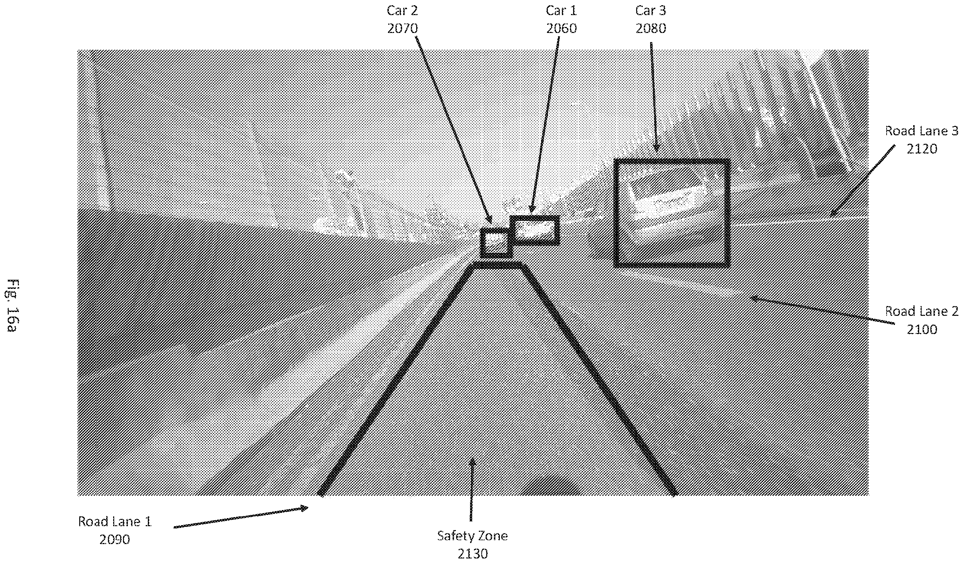

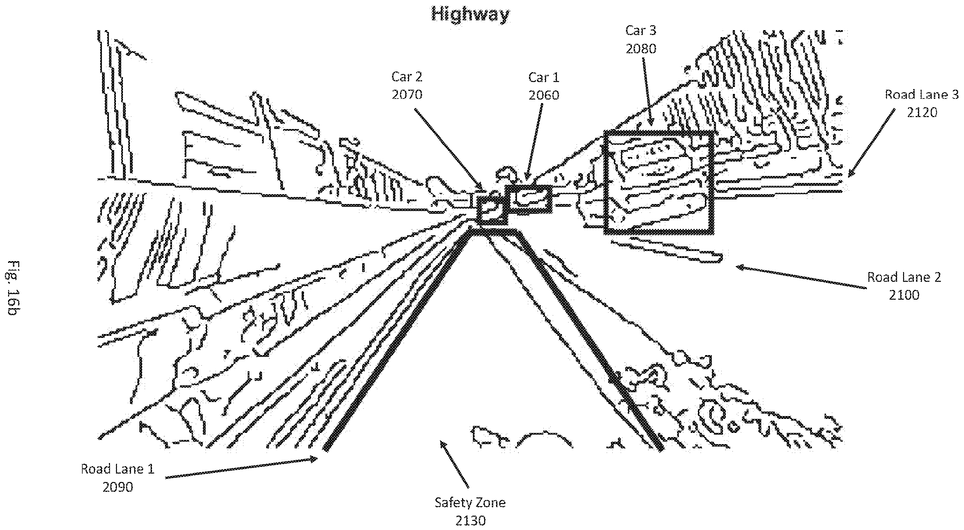

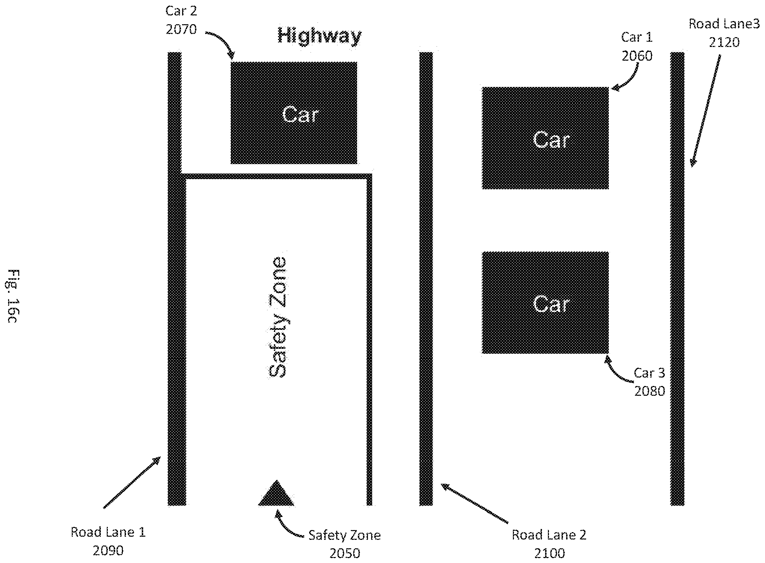

Two examples for different trapezoid sizes and orientations are shown in Fig. 15 and Fig. 16.

**Fig. 15a** demonstrates the situation when the cars 2000 and 2030 appear very large and close to the motorcycle, i.e. significantly larger and closer to the motorcycle 10 than those shown in Fig. 16a. Motorcycle's 10 speed is relatively low (e.g., less than 20 km/h). There are two more cars 2010 and 2020 in the scene, and all four cars 2000, 2010, 2020, and 2030, move slowly, if at all. During previous 10 seconds the motorcycle 10 was yawing a couple of times. Thus, this is a heavy traffic state. The trapezoid is narrow, short, and oriented according to current angles of motion. The trapezoid 2050 is shown in Fig. 15a and in Fig. 15b. Its corresponding safety zone rectangle 2050 is shown in Fig. 15c - scene view from above.

**Fig. 16a** demonstrates another situation when the cars 2060, 2070, and 2080 are moving fast, they appear relatively small and are quite far from the motorcycle 10. The motorcycle's 10 self-speed is relatively high (e.g., more than 50 km/h). During last 10 seconds the motorcycle 10 was rolling a number of times. All the above indicates that this is a light traffic state. The trapezoid is wide, long, and oriented accordingly to current angles of motion. The trapezoid 2130 is shown in Fig. 16a and in Fig. 16b. Its corresponding safety zone rectangle 2130 is shown in Fig. 16c - scene view from above.

**Fig. 17** shows a flowchart that presents a further drill down into block 1530.

Block 1513 demonstrates three different approaches for calculation of one, two, or all three angles of motion that influence the objects in the image plane. These angles are roll, yaw, and pitch.

Approach 1: Based on Inertial Measurement Unit (IMU) connected to the motorcycle 10 measurement of roll and/or yaw and/or pitch.

Approach 2: Based on the motorcycle's 10 angles of motion influence on the images 1515. Due to motorcycle 10 roll, objects in the image, particularly four wheelers ahead of the motorcycle 10, appear rotated. It is possible to reconstruct an approximation of the roll angle from each image of the images 1515. The convolutional network is applied to the images 1515. As a result, all objects in the region of interest are found, and for each such object a bounding box that contains it is defined. To each bounding box related to the four-wheeler back side we apply an edge detector (e.g., Canny edge detector) and look for all the lines (e.g., Hough transform is applied in order to find continuous lines in the edge map). Their slopes are calculated, and the lines are 'filtered' according to the range of possible roll values. For a regular motorcycle 10, riding roll angle varies between -30° to 30°. These lines' slopes vote to the final roll in accordance with their length. Median of all angles based on bounding boxes area defines the final roll for each image under consideration.

At the initial calibration step, we make sure that yaw and pitch are being initially set to zero and calculate the static vanishing point at this step. In each image 1515 we calculate the current vanishing point based on finding real world parallel lines that intersect at the current vanishing point in the image by using the following steps.

In order to find real world parallel lines projected onto the images 1515 we apply two procedures. First, we divide the lines of the certain slopes (e.g., between 5° and 85°) on the right and on the left of the image center in the bottom part of the image. Second, we transfer the image into HSV color space in which we are looking for the road white and yellow lanes. The resulting lines of both procedures above are supposed to intersect at the same point - current vanishing point.

The difference in x-coordinate between static and current vanishing points represents yaw influence on the image, while the difference in y-coordinate represents pitch influence.

Approach 3: Based on the angles of motion influence on the images 1515 and a known four wheelers symmetry. Most of the human made objects, including vehicles, have strong symmetric properties. In the image plane in the bounding box around a vehicle there exists a vertical axis of symmetry so that some pixels on the left of it have corresponding pixels on the right of it at the same distance from the axis of symmetry. Pairs of these corresponding points create a set of lines parallel to the ground and perpendicular to the axis of symmetry. Due to motorcycle roll, this set of parallel lines and axis of symmetry are rotated exactly at roll angle. Using this fact, we can find the motorcycle's 10 roll angle.

For each four-wheeler in the image, we consider its bounding box and create a map of its edges. For each possible roll angle candidate (e.g., any angle in the range between -30° to 30°) we define a ground line at this angle. Then we consider each line perpendicular to this ground line as a possible axis of symmetry and count the amount of symmetric pairs for this setup. This amount represents a score for this line. A line with a highest score is proclaimed to be an axis of symmetry for a roll candidate under consideration. The highest score among all rolls candidates defines best fit, and it is a roll angle for a given bounding box. As mentioned above, roll candidates may in general vary between -30° to 30° for a regular motorcycle riding. However, usually the range of possible candidates is much smaller, just a couple of degrees around a roll defined in the previous frames. This assumption is based on the fact that a roll angle is changing relatively slowly between consecutive frames.

At the end of this procedure in each image of 1515 we have a roll angle and a four-wheeler 'mask': axis of symmetry and a set of parallel lines with pairs of corresponding pixels on them. These lines are perpendicular to the axis of symmetry. We can match these masks between two consecutive bounding boxes corresponding to the same four-wheeler, first by coinciding their axes of symmetry then by moving one of them along its axis until there is a maximal number of matching pairs between two masks. This movement is due to the motorcycle 10 motion and it represents the motorcycle's 10 pitch angle. Knowing the motorcycle 10 speed and its influence on the image, in some cases we can find an approximation to a pitch angle when the movement for best masks fit is significantly larger (e.g., more than 10% larger) than the motorcycle's 10 motion influence on the image.

When four-wheeler appears just ahead of the motorcycle 10, the symmetry is perfect, i.e. the distance from the pixel to the left of the axis of symmetry is equal to the distance of the corresponding pixel to the right of it. However, due to the motorcycle yaw angle, this symmetry property might change: the distances are slightly different on the left and on the right of the axis of symmetry. This difference defines the motorcycle's yaw influence on the image. From this fact in some cases we can find an approximation of the motorcycle's 10 yaw angle.

In some cases, based on the self-data (blocks 1512, 1513), Kalman Filter tracking (linear / nonlinear) can be applied in order to define the motorcycle's 10 self-trajectory and its prediction for the time period needed for motorcyclist to react to the road situation period (next number of milliseconds, e.g., 1500 milliseconds for a regular motorcycle riding), block 1514.

In some cases, the motorcycle's 10 predictive trajectory might depend also on the road curve. In some cases, the road curve can be found from the images 1515. We transfer the image into HSV color space in which we are looking for the road white and yellow lanes and approximate them by, e.g. using a known curve fitting procedure.

It is to be understood that the presently disclosed subject matter is not limited in its application to the details set forth in the description contained herein or illustrated in the drawings. The presently disclosed subject matter is capable of other embodiments and of being practiced and carried out in various ways. Hence, it is to be understood that the phraseology and terminology employed herein are for the purpose of description and should not be regarded as limiting.

It will also be understood that the system according to the presently disclosed subject matter can be implemented, at least partly, as a suitably programmed computer. Likewise, the presently disclosed subject matter contemplates a computer program being readable by a computer for executing the disclosed method. The presently disclosed subject matter further contemplates a machine-readable memory tangibly embodying a program of instructions executable by the machine for executing the disclosed method.

## Claims

1. A riding assistance system (200) for a motorcycle (10) comprising:
a processing resource;
a memory configured to store data usable by the processing resource; and
at least one wide-angle forward-looking camera (120) configured to be installed on the motorcycle (10) in a manner enabling it to capture images of a scene including at least a right side and a left side in front of the motorcycle (10);
wherein the processing resource is configured to:
obtain a series of a plurality of images consecutively acquired by the wide-angle forward-looking camera (120), wherein a time passing between capturing of each consecutive image pair of the images is lower than a first threshold;
analyze a region of interest within at least a pair of consecutive images of the series to identify features having respective feature locations within the at least pair of consecutive images;
analyze the region of interest within at least one other pair, or more, of consecutive images of the series to identify the features having respective feature locations, wherein at least one of the images of the at least pair is one of the images of the other pair, or more;
match each of the features and its respective feature location within each image of the at least pair of consecutive images of the series to determine vectors of movement of each of the respective features between the at least pair of consecutive images of the series, the vectors of movement representing the movement of the features over time;
match the feature locations of the features within the at least pair and the other pair, or more, of consecutive images of the series to determine enhanced vectors of movement of each of the respective features between the consecutive images of the at least pair and the other pair, or more, wherein the enhanced vectors of movement are associated with a longest distance between the respective feature's locations within the images of the at least pair and the other pair, or more; and
generate a warning notification upon a criterion being met, wherein the criterion is associated with the vectors of movement of respective features or with the enhanced vectors of movement of respective features.

2. The riding assistance system (200) of claim 1, wherein the criterion is that a number of the vectors of movement of respective features being in a collision course with a direction of the motorcycle (10) exceeds another threshold.

3. The riding assistance system (200) of claim 1, wherein the criterion is that an average vector being a vector representing the average of the vectors of movements is in a collision course with a direction of the motorcycle (10).

4. The riding assistance system (200) of claim 1, wherein the processing resource is further configured to estimate a likelihood of presence of a vehicle associated with at least some of the features within a given image of the at least pair of consecutive images of the series; and
wherein the warning notification is generated only if the likelihood is above a third threshold.

5. The riding assistance system (200) of claim 1, wherein the processing resource is further configured to:
estimate a trajectory of each of the features;
identify an intersection point of the estimated trajectories;
wherein the criterion is met when the intersection is within a pre-defined area within a given image of the series.

6. The riding assistance system (200) of claim 1, wherein the processing resource is further configured to determine a mean value of optical flow in a vertical direction towards the motorcycle (10) within at least one other region of interest within the pair of consecutive images of the series, wherein the criterion is met when the mean value of optical flow exceeds an allowed mean optical flow threshold.

7. A riding assistance method for a motorcycle (10), the method comprising:
obtaining, by a processing resource, a series of a plurality of images consecutively acquired by at least one wide-angle forward-looking camera (120) configured to be installed on the motorcycle (10) in a manner enabling it to capture images of a scene including at least a right side and a left side in front of the motorcycle (10), wherein a time passing between capturing of each consecutive image pair of the images is lower than a first threshold;
analyzing a region of interest within at least a pair of consecutive images of the series to identify features having respective feature locations within the at least pair of consecutive images;
analyzing the region of interest within at least one other pair, or more, of consecutive images of the series to identify the features having respective feature locations, wherein at least one of the images of the pair is one of the images of the other pair;
matching each of the features and its respective feature location within each image of the at least pair of consecutive images of the series to determine vectors of movement of each of the respective features between the at least pair of consecutive images of the series, the vectors of movement representing the movement of the features over time;
matching the feature locations of the features within the at least pair and the other pair, or more, of consecutive images of the series to determine enhanced vectors of movement of each of the respective features between the consecutive images of the at least pair and the other pair, or more, wherein the enhanced vectors of movement are associated with a longest distance between the respective feature's locations within the images of the at least pair and the other pair, or more; and
generating a warning notification upon a criterion being met, wherein the criterion is associated with the vectors of movement of respective features or with the enhanced vectors of movement of respective features.

8. The riding assistance method of claim 7, wherein the criterion is that a number of the vectors of movement of respective features being in a collision course with a direction of the motorcycle (10) exceeds another threshold.

9. The riding assistance method of claim 7, wherein the criterion is that an average vector being a vector representing the average of the vectors of movements is in a collision course with a direction of the motorcycle (10).

10. The riding assistance method of claim 7, further comprising estimating a likelihood of presence of a vehicle associated with at least some of the features within a given image of the at least pair of consecutive images of the series; and wherein the warning notification is generated only if the likelihood is above a third threshold.

11. The riding assistance method of claim 7, further comprising:
estimating a trajectory of each of the features;
identifying an intersection point of the estimated trajectories;
wherein the criterion is met when the intersection is within a pre-defined area within a given image of the series.

12. The riding assistance method of claim 7, further comprising determining a mean value of optical flow in a vertical direction towards the motorcycle (10) within at least one other region of interest within the pair of consecutive images of the series, wherein the criterion is met when the mean value of optical flow exceeds an allowed mean optical flow threshold.

13. A non-transitory computer readable storage medium having computer readable program code embodied therewith, the computer readable program code, executable by a processing resource to perform a method comprising:
obtaining, by the processing resource, a series of a plurality of images consecutively acquired by at least one wide-angle forward-looking camera (120) configured to be installed on a motorcycle (10) in a manner enabling it to capture images of a scene including at least a right side and a left side in front of the motorcycle (10), wherein a time passing between capturing of each consecutive image pair of the images is lower than a first threshold;
analyzing a region of interest within at least a pair of consecutive images of the series to identify features having respective feature locations within the at least pair of consecutive images;
analyzing the region of interest within at least one other pair, or more, of consecutive images of the series to identify the features having respective feature locations, wherein at least one of the images of the pair is one of the images of the other pair;
matching each of the features and its respective feature location within each image of the at least pair of consecutive images of the series to determine vectors of movement of each of the respective features between the at least pair of consecutive images of the series, the vectors of movement representing the movement of the features over time;
matching the feature locations of the features within the at least pair and the other pair, or more, of consecutive images of the series to determine enhanced vectors of movement of each of the respective features between the consecutive images of the at least pair and the other pair, or more, wherein the enhanced vectors of movement are associated with a longest distance between the respective feature's locations within the images of the at least pair and the other pair, or more; and
generating a warning notification upon a criterion being met, wherein the criterion is associated with the vectors of movement of respective features or with enhanced vectors of movement of respective features.

## Patentansprüche

1. Fahrassistenzsystem (200) für ein Motorrad (10), umfassend:
eine Verarbeitungsressource;
einen Speicher, der konfiguriert ist, um von der Verarbeitungsressource verwendbare Daten zu speichern; und
mindestens eine Weitwinkel-Vorwärtssichtkamera (120), die konfiguriert ist, um auf dem Motorrad (10) so installiert zu werden, dass sie Bilder einer Szene aufnehmen kann, die mindestens eine rechte Seite und eine linke Seite vor dem Motorrad (10) umfasst;
wobei die Verarbeitungsressource konfiguriert ist, um:
eine Serie einer Vielzahl von Bildern zu erhalten, die aufeinanderfolgend von der Weitwinkel-Vorwärtssichtkamera (120) aufgenommen werden, wobei eine Zeit, die zwischen der Aufnahme jedes aufeinanderfolgenden Bildpaares der Bilder vergeht, niedriger als ein erster Schwellenwert ist;
einen Bereich von Interesse innerhalb mindestens eines Paares aufeinanderfolgender Bilder der Serie zu analysieren, um Merkmale mit entsprechenden Merkmalspositionen innerhalb des mindestens einen Paares aufeinanderfolgender Bilder zu identifizieren;
einen Bereich von Interesse innerhalb mindestens eines anderen Paares, oder mehrerer, aufeinanderfolgender Bilder der Serie zu analysieren, um die Merkmale mit entsprechenden Merkmalspositionen zu identifizieren, wobei mindestens eines der Bilder des mindestens einen Paares eines der Bilder des anderen Paares, oder mehrerer, ist;
jedes der Merkmale und seine jeweilige Merkmalsposition innerhalb jedes Bildes des mindestens einen Paares von aufeinanderfolgenden Bildern der Serie abzugleichen, um Bewegungsvektoren jedes der jeweiligen Merkmale zwischen dem mindestens einen Paar von aufeinanderfolgenden Bildern der Serie zu bestimmen, wobei die Bewegungsvektoren die Bewegung der Merkmale im Laufe der Zeit darstellen;
die Merkmalspositionen der Merkmale innerhalb des mindestens einen Paares und des anderen Paares, oder mehrerer, aufeinanderfolgender Bilder der Serie abzugleichen, um verbesserte Bewegungsvektoren jedes der jeweiligen Merkmale zwischen den aufeinanderfolgenden Bildern des mindestens einen Paares und des anderen Paares, oder mehrerer, zu bestimmen, wobei die verbesserten Bewegungsvektoren einem längsten Abstand zwischen den Positionen des jeweiligen Merkmals innerhalb der Bilder des mindestens einen Paares und des anderen Paares, oder mehrerer, zugeordnet sind; und
eine Warnmeldung zu erzeugen, wenn ein Kriterium erfüllt ist, wobei das Kriterium den Bewegungsvektoren der jeweiligen Merkmale oder den verbesserten Bewegungsvektoren der jeweiligen Merkmale zugeordnet ist.

2. Fahrassistenzsystem (200) nach Anspruch 1, wobei das Kriterium darin besteht, dass eine Anzahl der Bewegungsvektoren der jeweiligen Merkmale, die sich auf einem Kollisionskurs mit einer Richtung des Motorrads (10) befinden, einen weiteren Schwellenwert überschreitet.

3. Fahrassistenzsystem (200) nach Anspruch 1, wobei das Kriterium darin besteht, dass ein Durchschnittsvektor, der einen Vektor darstellt, der den Durchschnitt der Bewegungsvektoren repräsentiert, sich auf einem Kollisionskurs mit einer Richtung des Motorrads (10) befindet.

4. Fahrassistenzsystem (200) nach Anspruch 1, wobei die Verarbeitungsressource weiter konfiguriert ist, eine Wahrscheinlichkeit für das Vorhandensein eines Fahrzeugs zu schätzen, das mindestens einigen der Merkmale innerhalb eines gegebenen Bildes des mindestens einen Paares aufeinanderfolgender Bilder der Serie zugeordnet ist; und
wobei die Warnmeldung nur erzeugt wird, wenn die Wahrscheinlichkeit über einem dritten Schwellenwert liegt.

5. Fahrassistenzsystem (200) nach Anspruch 1, wobei die Verarbeitungsressource weiter dazu konfiguriert ist:
eine Trajektorie für jedes der Merkmale zu schätzen;
einen Schnittpunkt der geschätzten Trajektorien zu identifizieren;
wobei das Kriterium erfüllt ist, wenn der Schnittpunkt innerhalb eines vordefinierten Bereichs innerhalb eines bestimmten Bildes der Serie liegt.

6. Fahrassistenzsystem (200) nach Anspruch 1, wobei die Verarbeitungsressource weiter konfiguriert ist, einen Mittelwert des optischen Flusses in einer vertikalen Richtung zum Motorrad (10) innerhalb mindestens eines anderen Bereichs von Interesse innerhalb des Paares aufeinanderfolgender Bilder der Serie zu bestimmen, wobei das Kriterium erfüllt ist, wenn der Mittelwert des optischen Flusses einen zulässigen Schwellenwert für den mittleren optischen Fluss überschreitet.

7. Fahrassistenzverfahren für ein Motorrad (10), das Verfahren umfassend:
Erhalten, durch eine Verarbeitungsressource, einer Serie einer Vielzahl von Bildern, die aufeinanderfolgend durch mindestens eine Weitwinkel-Vorwärtssichtkamera (120) erfasst werden, die konfiguriert ist, um auf dem Motorrad (10) in einer Weise installiert zu werden, die es ihr ermöglicht, Bilder einer Szene zu erfassen, die mindestens eine rechte Seite und eine linke Seite vor dem Motorrad (10) umfasst, wobei eine Zeit, die zwischen dem Erfassen jedes aufeinanderfolgenden Bildpaares der Bilder vergeht, niedriger als ein erster Schwellenwert ist;
Analysieren eines Bereiches von Interesse innerhalb mindestens eines Paares aufeinanderfolgender Bilder der Serie, um Merkmale mit entsprechenden Merkmalspositionen innerhalb des mindestens einen Paares aufeinanderfolgender Bilder zu identifizieren;
Analysieren des Bereichs von Interesse innerhalb mindestens eines anderen Paares, oder mehrerer, aufeinanderfolgender Bilder der Serie, um die Merkmale mit entsprechenden Merkmalspositionen zu identifizieren, wobei mindestens eines der Bilder des mindestens einen Paares eines der Bilder des anderen Paares ist;
Abgleichen jedes der Merkmale und seiner jeweiligen Merkmalsposition innerhalb jedes Bildes des mindestens einen Paares von aufeinanderfolgenden Bildern der Serie, um Bewegungsvektoren jedes der jeweiligen Merkmale zwischen dem mindestens einen Paar von aufeinanderfolgenden Bildern der Serie zu bestimmen, wobei die Bewegungsvektoren die Bewegung der Merkmale über die Zeit darstellen;
Abgleichen der Merkmalspositionen der Merkmale innerhalb des mindestens einen Paares und des anderen Paares, oder mehrerer, aufeinanderfolgender Bilder der Serie, um verbesserte Bewegungsvektoren jedes der jeweiligen Merkmale zwischen den aufeinanderfolgenden Bildern des mindestens einen Paares und des anderen Paares, oder mehrerer, zu bestimmen, wobei die verbesserten Bewegungsvektoren einem längsten Abstand zwischen den Positionen des jeweiligen Merkmals innerhalb der Bilder des mindestens einen Paares und des anderen Paares, oder mehrerer, zugeordnet sind; und
Erzeugen einer Warnmeldung, wenn ein Kriterium erfüllt ist, wobei das Kriterium den Bewegungsvektoren der jeweiligen Merkmale oder den verbesserten Bewegungsvektoren der jeweiligen Merkmale zugeordnet ist.

8. Fahrassistenzverfahren nach Anspruch 7, wobei das Kriterium darin besteht, dass eine Anzahl der Bewegungsvektoren der jeweiligen Merkmale, die sich auf einem Kollisionskurs mit einer Richtung des Motorrads (10) befinden, einen weiteren Schwellenwert überschreitet.

9. Fahrassistenzverfahren nach Anspruch 7, wobei das Kriterium darin besteht, dass ein Durchschnittsvektor, der einen Vektor darstellt, der den Durchschnitt der Bewegungsvektoren repräsentiert, sich auf einem Kollisionskurs mit einer Richtung des Motorrads (10) befindet.

10. Fahrassistenzverfahren nach Anspruch 7, weiterhin umfassend das Schätzen einer Wahrscheinlichkeit für das Vorhandensein eines Fahrzeugs, das mindestens einigen der Merkmale innerhalb eines gegebenen Bildes des mindestens einen Paares aufeinanderfolgender Bilder der Serie zugeordnet ist; und wobei die Warnmeldung nur erzeugt wird, wenn die Wahrscheinlichkeit über einem dritten Schwellenwert liegt.

11. Fahrassistenzverfahren nach Anspruch 7, weiterhin umfassend:
Schätzen einer Trajektorie für jedes der Merkmale;
Identifizieren eines Schnittpunkts der geschätzten Trajektorien;
wobei das Kriterium erfüllt ist, wenn der Schnittpunkt innerhalb eines vordefinierten Bereichs innerhalb eines bestimmten Bildes der Serie liegt.

12. Fahrassistenzverfahren nach Anspruch 7, weiterhin umfassend, Bestimmen eines Mittelwerts des optischen Flusses in vertikaler Richtung zum Motorrad (10) in mindestens einem anderen Bereich von Interesse innerhalb des Paares aufeinanderfolgender Bilder der Serie, wobei das Kriterium erfüllt ist, wenn der Mittelwert des optischen Flusses einen zulässigen Schwellenwert für den mittleren optischen Fluss überschreitet.

13. Nicht-transitorisches, computerlesbares Speichermedium mit einem darin verkörperten computerlesbaren Programmcode, wobei der computerlesbare Programmcode von einer Verarbeitungsressource ausgeführt werden kann, um ein Verfahren durchzuführen, umfassend:
Erhalten, durch die Verarbeitungsressource, einer Serie einer Vielzahl von Bildern, die nacheinander durch mindestens eine Weitwinkel-Vorwärtssichtkamera (120) erfasst werden, die konfiguriert ist, um auf einem Motorrad (10) in einer Weise installiert zu werden, die es ihr ermöglicht, Bilder einer Szene zu erfassen, die mindestens eine rechte Seite und eine linke Seite vor dem Motorrad (10) umfasst, wobei die Zeit, die zwischen der Aufnahme jedes aufeinanderfolgenden Bildpaares der Bilder vergeht, niedriger ist als ein erster Schwellenwert;
Analysieren eines Bereiches von Interesse innerhalb mindestens eines Paares aufeinanderfolgender Bilder der Serie, um Merkmale mit entsprechenden Merkmalspositionen innerhalb des mindestens einen Paares aufeinanderfolgender Bilder zu identifizieren;
Analysieren des Bereiches von Interesse innerhalb mindestens eines anderen Paares, oder mehrerer, aufeinanderfolgender Bilder der Serie, um die Merkmale mit entsprechenden Merkmalspositionen zu identifizieren, wobei mindestens eines der Bilder des Paares eines der Bilder des anderen Paares ist;
Abgleichen jedes der Merkmale und seiner jeweiligen Merkmalsposition innerhalb jedes Bildes des mindestens einen Paares von aufeinanderfolgenden Bildern der Serie, um Bewegungsvektoren jedes der jeweiligen Merkmale zwischen dem mindestens einen Paar von aufeinanderfolgenden Bildern der Serie zu bestimmen, wobei die Bewegungsvektoren die Bewegung der Merkmale über die Zeit darstellen;
Abgleichen der Merkmalspositionen der Merkmale innerhalb des mindestens einen Paares und des anderen Paares, oder mehrerer, aufeinanderfolgender Bilder der Serie, um verbesserte Bewegungsvektoren jedes der jeweiligen Merkmale zwischen den aufeinanderfolgenden Bildern des mindestens einen Paares und des anderen Paares, oder mehrerer, zu bestimmen, wobei die verbesserten Bewegungsvektoren einem längsten Abstand zwischen den Positionen des jeweiligen Merkmals innerhalb der Bilder des mindestens einen Paares und des anderen Paares oder mehrerer zugeordnet sind; und
Erzeugen einer Warnmeldung, wenn ein Kriterium erfüllt ist, wobei das Kriterium den Bewegungsvektoren der jeweiligen Merkmale oder verbesserten Bewegungsvektoren der jeweiligen Merkmale zugeordnet ist.

## Revendications

1. Système d'assistance à la conduite (200) pour une moto (10) comprenant :
une ressource de traitement ;
une mémoire configurée pour stocker des données utilisables par la ressource de traitement ; et
au moins une caméra frontale grand angle (120) configurée pour être installée sur la moto (10) de manière à lui permettre de capturer des images d'une scène comportant au moins un côté droit et un côté gauche devant la moto (10) ;
dans lequel la ressource de traitement est configurée pour :
obtenir une série d'une pluralité d'images acquises consécutivement par la caméra frontale grand angle (120), dans lequel un temps s'écoulant entre la capture de chaque paire d'images consécutives des images est inférieur à un premier seuil ;
analyser une région d'intérêt dans au moins une paire d'images consécutives de la série pour identifier des caractéristiques ayant des emplacements de caractéristique respectifs dans l'au moins une paire d'images consécutives ;
analyser la région d'intérêt dans au moins une autre paire, ou plus, d'images consécutives de la série pour identifier les caractéristiques ayant des emplacements de caractéristique respectifs, dans lequel au moins une des images de l'au moins une paire est l'une des images de l'autre paire, ou plus ;
faire correspondre chacune des caractéristiques et son emplacement de caractéristique respectif dans chaque image de l'au moins une paire d'images consécutives de la série pour déterminer des vecteurs de mouvement de chacune des caractéristiques respectives entre l'au moins une paire d'images consécutives de la série, les vecteurs de mouvement représentant le mouvement des caractéristiques dans le temps ;
faire correspondre les emplacements de caractéristique des caractéristiques dans l'au moins une paire et l'autre paire, ou plus, d'images consécutives de la série pour déterminer des vecteurs de mouvement améliorés de chacune des caractéristiques respectives entre les images consécutives de l'au moins une paire et de l'autre paire, ou plus, dans lequel les vecteurs de mouvement améliorés sont associés à une distance la plus longue entre les emplacements de caractéristique respectifs dans les images de l'au moins une paire et de l'autre paire, ou plus ; et
générer une notification d'avertissement lorsqu'un critère est satisfait, dans lequel le critère est associé aux vecteurs de mouvement de caractéristiques respectives ou aux vecteurs de mouvement améliorés de caractéristiques respectives.

2. Système d'assistance à la conduite (200) selon la revendication 1, dans lequel le critère est qu'un nombre des vecteurs de mouvement de caractéristiques respectives se trouvant dans une trajectoire de collision avec une direction de la moto (10) dépasse un autre seuil.

3. Système d'assistance à la conduite (200) selon la revendication 1, dans lequel le critère est qu'un vecteur moyen étant un vecteur représentant la moyenne des vecteurs de mouvements se trouve dans une trajectoire de collision avec une direction de la moto (10).

4. Système d'assistance à la conduite (200) selon la revendication 1, dans lequel la ressource de traitement est en outre configurée pour estimer une probabilité de présence d'un véhicule associé à au moins certaines des caractéristiques dans une image donnée de l'au moins une paire d'images consécutives de la série ; et
dans lequel la notification d'avertissement est générée uniquement si la probabilité est supérieure à un troisième seuil.

5. Système d'assistance à la conduite (200) selon la revendication 1, dans lequel la ressource de traitement est en outre configurée pour :
estimer une trajectoire de chacune des caractéristiques ;
identifier un point d'intersection des trajectoires estimées ;
dans lequel le critère est satisfait lorsque l'intersection se situe dans une zone prédéfinie dans une image donnée de la série.

6. Système d'assistance à la conduite (200) selon la revendication 1, dans lequel la ressource de traitement est en outre configurée pour déterminer une valeur moyenne de flux optique dans une direction verticale vers la moto (10) dans au moins une autre région d'intérêt dans la paire d'images consécutives de la série, dans lequel le critère est satisfait lorsque la valeur moyenne de flux optique dépasse un seuil de flux optique moyen autorisé.

7. Procédé d'assistance à la conduite pour une moto (10), le procédé comprenant :
l'obtention, au moyen d'une ressource de traitement, d'une série d'une pluralité d'images acquises consécutivement par au moins une caméra frontale grand angle (120) configurée pour être installée sur la moto (10) de manière à lui permettre de capturer des images d'une scène comportant au moins un côté droit et un côté gauche devant la moto (10), dans lequel un temps s'écoulant entre la capture de chaque paire d'images consécutives des images est inférieur à un premier seuil ;
l'analyse d'une région d'intérêt dans au moins une paire d'images consécutives de la série pour identifier des caractéristiques ayant des emplacements de caractéristique respectifs dans l'au moins une paire d'images consécutives ;
l'analyse de la région d'intérêt dans au moins une autre paire, ou plus, d'images consécutives de la série pour identifier les caractéristiques ayant des emplacements de caractéristique respectifs, dans lequel au moins une des images de la paire est l'une des images de l'autre paire ;
la mise en correspondance de chacune des caractéristiques et son emplacement de caractéristique respectif dans chaque image de l'au moins une paire d'images consécutives de la série pour déterminer des vecteurs de mouvement de chacune des caractéristiques respectives entre l'au moins une paire d'images consécutives de la série, les vecteurs de mouvement représentant le mouvement des caractéristiques dans le temps ;
la mise en correspondance des emplacements de caractéristique des caractéristiques dans l'au moins une paire et l'autre paire, ou plus, d'images consécutives de la série pour déterminer des vecteurs de mouvement améliorés de chacune des caractéristiques respectives entre les images consécutives de l'au moins une paire et l'autre paire, ou plus, dans lequel les vecteurs de mouvement améliorés sont associés à une distance la plus longue entre les emplacements de caractéristique respectifs dans les images de l'au moins une paire et de l'autre paire, ou plus ; et
la génération d'une notification d'avertissement lorsqu'un critère est satisfait, dans lequel le critère est associé aux vecteurs de mouvement de caractéristiques respectives ou aux vecteurs de mouvement améliorés de caractéristiques respectives.

8. Procédé d'assistance à la conduite selon la revendication 7, dans lequel le critère est qu'un nombre des vecteurs de mouvement de caractéristiques respectives se trouvant dans une trajectoire de collision avec une direction de la moto (10) dépasse un autre seuil.

9. Procédé d'assistance à la conduite selon la revendication 7, dans lequel le critère est qu'un vecteur moyen étant un vecteur représentant la moyenne des vecteurs de mouvements se trouve dans une trajectoire de collision avec une direction de la moto (10).

10. Procédé d'assistance à la conduite selon la revendication 7, comprenant en outre l'estimation d'une probabilité de présence d'un véhicule associé à au moins certaines des caractéristiques dans une image donnée de l'au moins une paire d'images consécutives de la série ; et dans lequel la notification d'avertissement est générée uniquement si la probabilité est supérieure à un troisième seuil.

11. Procédé d'assistance à la conduite selon la revendication 7, comprenant en outre :
l'estimation d'une trajectoire de chacune des caractéristiques ;
l'identification d'un point d'intersection des trajectoires estimées ;
dans lequel le critère est satisfait lorsque l'intersection se situe dans une zone prédéfinie dans une image donnée de la série.

12. Procédé d'assistance à la conduite selon la revendication 7, comprenant en outre la détermination d'une valeur moyenne de flux optique dans une direction verticale vers la moto (10) dans au moins une autre région d'intérêt dans la paire d'images consécutives de la série, dans lequel le critère est satisfait lorsque la valeur moyenne de flux optique dépasse un seuil de flux optique moyen autorisé.

13. Support de stockage non transitoire lisible par ordinateur dans lequel est incorporé un code de programme lisible par ordinateur, le code de programme lisible par ordinateur, exécutable par une ressource de traitement pour exécuter un procédé comprenant :
l'obtention, au moyen de la ressource de traitement, d'une série d'une pluralité d'images acquises consécutivement par au moins une caméra frontale grand angle (120) configurée pour être installée sur une moto (10) de manière à lui permettre de capturer des images d'une scène comportant au moins un côté droit et un côté gauche devant la moto (10), dans lequel un temps s'écoulant entre la capture de chaque paire d'images consécutives des images est inférieur à un premier seuil ;
l'analyse d'une région d'intérêt dans au moins une paire d'images consécutives de la série pour identifier des caractéristiques ayant des emplacements de caractéristique respectifs dans l'au moins une paire d'images consécutives ;
l'analyse de la région d'intérêt dans au moins une autre paire, ou plus, d'images consécutives de la série pour identifier les caractéristiques ayant des emplacements de caractéristique respectifs, dans lequel au moins une des images de la paire est l'une des images de l'autre paire ;
la mise en correspondance de chacune des caractéristiques et son emplacement de caractéristique respectif dans chaque image de l'au moins une paire d'images consécutives de la série pour déterminer des vecteurs de mouvement de chacune des caractéristiques respectives entre l'au moins une paire d'images consécutives de la série, les vecteurs de mouvement représentant le mouvement des caractéristiques dans le temps ;
la mise en correspondance des emplacements de caractéristique des caractéristiques dans l'au moins une paire et l'autre paire, ou plus, d'images consécutives de la série pour déterminer des vecteurs de mouvement améliorés de chacune des caractéristiques respectives entre les images consécutives de l'au moins une paire et l'autre paire, ou plus, dans lequel les vecteurs de mouvement améliorés sont associés à une distance la plus longue entre les emplacements de caractéristiques respectifs dans les images de l'au moins une paire et de l'autre paire, ou plus ; et
la génération d'une notification d'avertissement lorsqu'un critère est satisfait, dans lequel le critère est associé aux vecteurs de mouvement de caractéristiques respectives ou à des vecteurs de mouvement améliorés de caractéristiques respectives.
